# EUROPÄISCHE PATENTSCHRIFT

(11) **EP 2 927 272 B1**
(45) Veröffentlichungstag und Bekanntmachung des Hinweises auf die Patenterteilung: **16.08.2017**
(21) Anmeldenummer: 14162674.7
(22) Anmeldetag: 31.03.2014
(51) Int. Cl.: C08K 5/00, C08L 77/00, C08L 77/02, C08L 77/06

(54) **Polyamid-Formmassen, Verfahren zu deren Herstellung und Verwendungen dieser Polyamid-Formmassen**
Polyamide moulding materials, method for their production and uses of these polyamide moulding materials
Masses de formage en polyamide, leur procédé de fabrication et utilisations de ces masses de formage en polyamide

(43) Veröffentlichungstag der Anmeldung: 07.10.2015
(73) Patentinhaber: EMS-PATENT AG, 7013 Domat / Ems (CH)
(72) Erfinder: Bayer, Andreas, 7013 Domat / Ems (CH); Hoffmann, Botho, 7013 Domat / Ems (CH); Lamberts, Nikolai, 7402 Bonaduz (CH); Harder, Philipp, 7000 Chur (CH); Hewel, Manfred, Dr., 7013 Domat / Ems (CH)
(74) Vertreter: Bremi, Tobias Hans

(56) Entgegenhaltungen:
- EP-A1- 0 368 281
- EP-A1- 2 325 260
- EP-A2- 1 170 334
- WO-A2-2007/101809
- US-A1- 2008 269 375
- US-A1- 2013 338 260

## Beschreibung

### TECHNISCHES GEBIET

Die vorliegende Erfindung betrifft Polyamid-Formmassen, Verfahren zu deren Herstellung und Verwendungen dieser Polyamid-Formmassen.

### STAND DER TECHNIK

Teilkristalline, teilaromatische Polyamide oder Copolyamide wurden für die Verwendung in Hochtemperaturanwendungen entwickelt und zeichnen sich, insbesondere bei einem Gehalt von mindestens 50 Mol-% teilaliphatischen Terephthalamideinheiten, durch ihre besonders guten thermo-mechanischen Eigenschaften aus. Der Schmelzpunkt derartiger Polyamide liegt typischerweise im Bereich von 270 bis 340°C. In Abhängigkeit der Zusammensetzung der Formmassen auf Basis dieser Polyamide zeigen sich u.U. Schwächen insbesondere hinsichtlich der Zähigkeit, d.h. in der Reissdehnung, der Bruchenergie, der Schlagzähigkeit und der Kerbschlagzähigkeit. Darüber hinaus sind die mechanischen Eigenschaften gemessen quer zur Verarbeitungsrichtung besonders bei faserverstärkten Formmassen eher niedrig und deutlich schlechter als in Verarbeitungsrichtung. Mit üblichen Schlagzähmodifikatoren, d.h. Styrol-Copolymeren, Polyolefinen oder Polyolefin-co-acrylaten, auch wenn diese aus Verträglichkeitsgründen mit z.B. Maleinsäureanhydrid gepfropft sind, lassen sich zwar meist die Schlagzähigkeit oder die Bruchenergie in Längsrichtung leicht erhöhen, gleichzeitig wird aber die Reissfestigkeit deutlich reduziert. Nicht verbessert, sondern in der Regel ebenfalls deutlich verschlechtert, werden durch einen solchen Zusatz an Schlagzähmodifikatoren die mechanischen Eigenschaften quer zur Verarbeitungsrichtung.

Die WO-A-2000/73375 beschreibt halogenfreie Flammschutzzusätze für Polykondensate enthaltend ein Polyolefin mit 0.1 - 30 Gew.-% eines Monomers, das Säure-, Säureanhydrid- oder Epoxy-Gruppen trägt. Neben der Reduktion der Nachbrenndauer im Brandtest werden durch Zusatz des Polyolefins zu den Polykondensaten die mechanischen Eigenschaften nahezu auf gleichem Niveau gehalten. D.h. der Zusatz von modifizierten Polyolefinen führt nicht zur Verbesserung der mechanischen Eigenschaften der Polykondensate. Für Polyester werden modifizierte Polyolefine mit Epoxygruppen, für Polyamide Polyethylen-co-α-olefine mit Maleinsäureanhyridgruppen vorgeschlagen.

Die DE-A-100 30 716 beschreibt Polyamidformmassen enthaltend aliphatische Polyamide mit Aminoendgruppenüberschuss und einer Mischung aus zwei Schlagzähmodifikatoren (SZM), wobei die erste SZM-Komponente ein Polyolefin oder SEBS mit Säureanhydridgruppen ist und die zweite SZM-Komponente ein Copolymer ist, welches sich aus den Monomeren (1) α-Olefin, (2) (Meth)acrylsäure, (Meth)arylat sowie (3) olefinisch ungesättigten Carbonsäureanhydriden, Carbonsäureimiden, Epoxiden, Oxazolinen oder Oxazinonen zusammensetzt. Die unverstärkten Formulierungen zeichnen sich insbesondere durch eine hohe Tieftemperaturschlagzähigkeit aus, wie sie für Benzinleitungen im Automobilbereich gefordert wird. Die anhand der aliphatischen Polyamide gefundenen Zusammenhänge zwischen Schlagzähmodifikatoren und den resultierenden mechanischen Eigenschaften lassen sich nicht auf hochschmelzende, faserverstärkte teilaromatische Polyamid-Formmassen übertragen.

Die EP-A-0 350 689 betrifft mit rotem Phosphor flammgeschützte Polyamidformmassen auf Basis teilaromatischer Polyamide. Die Formmassen können optional mit Glasfasern verstärkt werden und enthalten gegebenenfalls bis zu 40 Gew.-% schlagzähmodifizierende Polymere (SZM). Innerhalb einer umfangreichen Aufzählung mit einer Vielzahl von in Frage kommender Schlagzähmodifikatoren werden u.a. auch Copolymere, die Glycidyl(meth)acrylat enthalten, genannt. In den Beispielen wird überhaupt kein Schlagzähmodifikator gearbeitet und es wird auch kein ggf. möglicher Effekt, der in diesem Zusammenhang auf den Zusatz an SZM zurückgehen könnte, beschrieben.

Die WO-A-2000/24830 beschreibt Formmassen, enthaltend teilaromatische Polyamide und Schlagzähmodifikatoren, für die Herstellung von elektrischen Konnektoren im Automobilbereich. Neben der guten Formbarkeit wird die geringe Oberflächenrauhigkeit, die hohe Dimensionsstabilität sowie die für Polyphthalamide üblichen hohen Temperaturbeständigkeiten erwähnt. Als Schlagzähmodifikatoren werden Polyolefine beschrieben, die durch Pfropfung mit Carbonsäuren oder Carbonsäureanhydriden modifiziert sind. Faserverstärkte Formmassen werden in den Beispielen nicht gearbeitet. WO-A-2004/092274 betrifft schlagzähmodifizierte Polyphthalamide für das Blasformen, so dass die Formmassen geringfügig glasfaserverstärkt sein können. Als Schlagzähmodifikatoren kommen eine Vielzahl von Polymeren in Frage, wie z.B. Polyolefine, Polystyrol-Polyolefin-Blockcopolymere, Polyolefin-Acrylat-Copolymere, die jeweils durch Pfropfung mit olefinisch ungesättigten Monomeren modifiziert sind. Die Formmassen sollen ein geringes Absackverhältnis bei der Herstellung des Blasrohlings aufweisen.

DE 198 41 234 C1 bezieht sich auf eine reversible thermotrope Kunststoffformmasse aus zwei thermodynamisch nicht miteinander mischbaren Komponenten, wobei die erste Komponente aus transparentem Kunststoff besteht. Die zweite Komponente kann u.a. ein Ethylen-co-Glycidylmethacrylat-Copolymer (E-GMA) sein. Gearbeitet werden unverstärkte Mischungen aus amorphem Polyamid PA MACM12 und einem Copolymeren E-GMA, wobei mit zunehmender Konzentration der zweiten Komponente die Kerbschlagzähigkeit erhöht und die Transparenz verringert wird. Weiterhin ändert sich die Transparenz dieser Formmassen in Abhängigkeit von der Temperatur.

Aus der US2013338260 ist eine in der Schmelze gemischte thermoplastische Zusammensetzung bekannt, welche a) ein teilkristallines Polyamid-Harz, b) eine Polyepoxy-Verbindung mit wenigstens zwei oder mehr Epoxygruppen aufweist, wobei diese Verbindung ein mittleres Molekulargewicht von weniger als 8000 aufweist, sowie eine oder mehrere Carboxylsäureverbindungen ausgewählt aus der Gruppe bestehend aus: Polysäuren, Säurealkohole und Kombinationen von diesen Verbindungen, wobei die Carboxylsäureverbindungen ein mittleres Molekulargewicht von weniger als 2000 aufweisen, sowie optional weiter d) Verstärkungsmittel, e) polymere Härter und f) weitere Additive. Im Rahmen von Vergleichsbeispielen werden Systeme wie Polyamid 66/6T mit einem Schmelzpunkt von weniger als 270°C gearbeitet zusammen mit einem Ethylene/butyl acrylate/glycidyl methacrylate Copolymer in einem geringen Gewichtsanteil von einem Prozent.

Aus der EP 2 325 260 ist eine Polyamid-Formmasse mit folgender Zusammensetzung bekannt: (a) 40 - 90 Gew.-% eines Copolyamids, wobei dieses aufgebaut ist aus (a1) 1,6-Hexandiamin und 1,10-Dekandiamin sowie (a2) Terephthalsäure und mindestens einem weiteren polyamidbildenden Monomeren ausgewählt aus der Gruppe: Dicarbonsäure mit 8 - 18 Kohlenstoffatomen, Laurinlactam, Aminolaurinsäure und/ oder Mischungen davon; (b) 10 - 40 Gew.-% makromolekulare Weichmacher, mit der Maßgabe, dass diese teilweise durch niedermolekulare Weichmacher ersetzt sein können; (c) 0 - 20 Gew.-% Additive und/oder Zusatzstoffe. Zudem werden Verwendungen einer solchen Formmasse insbesondere zur Herstellung einer Kraftstoffleitung, Kühlleitung, Ölleitung oder Harnstoffleitung für den Automobilbereich beschrieben sowie Herstellungsverfahren zu Formteilen.

Aus der EP 0 368 281 ist eine Polyamidharzzusammensetzung bekannt, die folgende Komponenten enthält: (A) ein aromatisches Polyamidharz, umfassend (a) eine aromatische Dicarbonsäure-Komponente, (b) eine Diaminkomponente, umfassend mindestens eine aliphatische Diamin-Komponente oder alicyclische Diaminkomponente; (B) ein Olefin-Copolymer in Mengen von 0,5-50 Gewichtsteilen in Bezug auf 100 Gewichtsteile des aromatischen Polyamidharzes, das eine alpha-Olefin-Komponente und eine alpha, betaungesättigte Carbonsäure-Glycidylester-Komponente in Mengen von 1 -30%, bezogen auf das Copolymer aufweist. Die Polyamidharzzusammensetzung kann ferner ein Polyarylat in Mengen von 10-200 Gewichtsteilen enthalten in Bezug auf 100 Gewichtsteile der Polyamid-Harze, wobei das Polyarylat ein Polymerisationsprodukt aus Bisphenolen und aromatischen Dicarbonsäuren oder ihre Derivate ist.

### DARSTELLUNG DER ERFINDUNG

Der Erfindung liegt u.a. die Aufgabe zugrunde, eine verbesserte Formmasse auf Basis hochschmelzender, insbesondere teilkristalliner und teilaromatischer Polyamide bereitzustellen, die neben einer hohen Wärmeformbeständigkeit (HDT A (1.80 MPa) von vorzugsweise im Bereich von wenigstens 240°C und/oder HDT C (8 MPa) von vorzugsweise im Bereich von wenigstens 130°C eine hohe Reissfestigkeit und Reissdehnung sowie verbesserte mechanische Eigenschaften, d.h. eine hohe Reissfestigkeit, Reissdehnung und Bruchenergie quer zur Verarbeitungsrichtung aufweist. Die Wärmeformbeständigkeit einer mit 40 Gew.-% Glasfasern verstärkten Formmasse ausgedrückt als HDT A soll bevorzugtermassen wenigstens 250°C und/oder als HDT C wenigstens 140°C betragen.

Die Lösung dieser Aufgabe wird dadurch erreicht, dass eine Polyamidformmasse gemäss Anspruch 1 bereitgestellt wird.

Dabei sind modifizierte, d.h. gepfropfte Schlagzähmodifikatoren als Bestandteil der Polyamidformmasse ausgeschlossen. Gepfropft im Zusammenhang mit den aus der Polyamidformmasse ausgeschlossenen Schlagzähmodifikatoren bedeutet im Sinne der vorliegenden Erfindung, dass die Modifizierung eines Polymers (Schlagzähmodifikator) durch eine Pfropfreaktion mit vorzugsweise niedermolekularen, ungesättigten Verbindungen, wie beispielsweise Maleinsäureanhydrid, also durch Pfropfung erzeugt wurde, und dass durch die Pfropfreaktion reaktive funktionelle Gruppen in das Polymer eingebracht werden. Demnach sind gepfropfte Schlagzähmodifikatoren solche mit reaktiven funktionellen Gruppen ausgestattete Polymere, wobei die funktionellen Gruppen durch z.B. radikalische Pfropfung von beispielsweise Styrol-Copolymeren, Polyolefinen oder Polyolefincopolymeren mit ungesättigten Verbindungen entstanden sind. In diesem Sinne ungesättigte Verbindungen sind beispielsweise ungesättigte Carbonäuren, wie z.B. Itaconsäure, oder ungesättigte Carbonsäureanhydride, wie z.B. Maleinsäureanhydrid. Ausgeschlossen sind damit beispielsweise insbesondere derart modifizierte Polyolefine oder modifizierte Polyolefincopolymere.

Die Verwendung dieser gepfropften Polyolefine oder gepfropften Polyolefincopolymere ist gemäss der vorliegenden Erfindung ausgeschlossen, weil die mechanischen Eigenschaften insbesondere quer zur Verarbeitungsrichtung durch deren Anwesenheit nicht verbessert, sondern im Gegenteil im Regelfall verschlechtert werden.

Keines der oben aufgeführten Dokumente des Standes der Technik beschreibt eine Polyamidformmasse mit der beanspruchten Zusammensetzung. Auch wird weder darauf hingewiesen, wie die mechanischen Eigenschaften quer zur Verarbeitungsrichtung von faserverstärkten teilaromatischen Polyamidformmassen mit hohem Schmelzpunkt zu verbessern sein könnten, noch darauf, dass solche Polyamidformmassen für den Bereich von Formteilen, die eine hohe Belastung quer zur Faserrichtung aushalten müssen, weil die Formteile z.B. Stege enthalten oder als Hohlkörper mit Innendruck belastet werden oder hohen Schlagbelastungen ausgesetzt sind, besonders geeignet sein könnten. Insbesondere können die Dokumente des Standes der Technik den Fachmann nicht vermuten lassen, dass eine solche Formmasse die für derartige Anwendungen hervorragende Längs- und Quereigenschaften, gepaart mit einer hohen Wärmeformbeständigkeit und einer hohen Schlag- und Kerbschlagzähigkeit zu erreichen in der Lage ist.

Ein wesentliches Element der Erfindung besteht somit u.a. darin, erkannt zu haben, dass die vorgeschlagene spezifische Zusammensetzung in unerwarteter Weise tatsächlich neben einer hohen Wärmeformbeständigkeit zum einen eine hohe Reissfestigkeit und Reissdehnung in Längsrichtung und zum anderen gegenüber dem Stand der Technik deutlich verbesserte mechanische Eigenschaften quer zur Verarbeitungsrichtung, insbesondere Reissfestigkeit, Reissdehnung und Bruchenergie aufweisen kann und bei den angegebenen Verstärkungsgraden (Anteil von der Komponente (C)) immer noch gut verarbeitet werden kann.

Gemäß der Erfindung ist die Polyamidformmasse so aufgebaut, dass sie aus den Komponenten in folgenden Anteilen besteht:
(M) 32 - 84.9 Gew.-% einer Mischung bestehend aus (A) und (B) in folgenden Anteilen:
   (A) 85 - 99 Gew.-% teilkristallines, teilaromatisches Polyamid mit einem Schmelzpunkt von mehr als 270°C oder eine Mischung solcher Polyamide;
   (B) 3 - 15 Gew.-% Copolymer aus Glycidylacrylat und/oder Glycidylmethacrylat mit mindestens einem weiteren Monomeren mit wenigstens einer olefinischen Kohlenstoff-Kohlenstoff-Doppelbindung oder eine Mischung solcher Copolymere;
   wobei die Summe von A und B 100% der Komponente (M) ergibt;
(C) 15 - 65 Gew.-% faserförmige Verstärkungsmittel;
(D) 0.1 - 3.0 Gew.-% Wärmestabilisatoren;
(E) 0 - 25 Gew.-% Hilfsstoffe und/oder Additive, verschieden von den Komponenten
(C) und (D), und/oder Polymere verschieden von (A) und (B).

Nach der Erfindung besteht dabei die Polyamidformmasse aus den genannten Komponenten, das heißt die Summe aus (M), (C), (D) und (E) macht 100 Gew.-% aus. Bevorzugtermassen liegt der Anteil von (M) im Bereich von 35 - 79.8 Gew.-%, vorzugsweise im Bereich von 40 -74.75 Gew.-% oder 45 - 69.8 Gew.-%.

Innerhalb dieser Komponente (M) sind bevorzugterweise die Verhältnisse der Komponenten (A) und (B) wie folgt ausgestaltet: Jeweils bezogen auf die Summe von (A) und (B) als 100% der Komponente (M), liegt die die Komponente (A) im Bereich von 88 - 98 Gew.-%, bevorzugt im Bereich von 89 - 97 Gew.-% vor, insbesondere bevorzugt im Bereich von 90-97 Gew.-% und/oder die Komponente (B) im Bereich von 2 - 12 Gew.-%, bevorzugt im Bereich von 3 - 11 Gew.-%, insbesondere bevorzugt im Bereich von 3-10 Gew.-%.

Bei den erfindungsgemäss eingesetzten teilkristallinen, teilaromatischen Polyamiden (Komponente A) mit einem Schmelzpunkt von grösser als 270°C handelt es sich bevorzugt um Polyphthalamide, insbesondere um Polyamide mit einem Gehalt an Terephthalsäure von mindestens 52 mol-%, bevorzugt mindestens 54 mol-% und besonders bevorzugt mindestens 57 mol-%, jeweils bezogen auf die insgesamt enthaltenen Dicarbonsäuren und einem Gehalt an aliphatischen Diaminen mit 4 bis 18 C-Atomen, bevorzugt mit 6 bis 12 C-Atomen, von wenigstens 70 mol-%, bevorzugt von wenigstens 80 mol-% und insbesondere bevorzugt von 100 mol-% bezogen auf die insgesamt enthaltenen Diamine. Bevorzugt liegt der Gehalt an Terephthalsäure im Bereich von 52 - 100 mol-%, besonders bevorzugt im Bereich von 54 - 82 oder 57 - 74 mol-% bezogen auf die Gesamtmenge der vorhandenen Dicarbonsäuren.

Neben der Terephthalsäure können andere aromatische, aliphatische oder cycloaliphatische Dicarbonsäuren mit 6 bis 36 Kohlenstoffatomen in den erfindungsgemässen teilaromatischen Polyamiden eingesetzt werden. Zu den geeigneten aromatischen Dicarbonsäuren zählen die Naphthalindicarbonsäure (NDA) und die Isophthalsäure (IPS). Geeignete aliphatische Dicarbonsäuren sind Adipinsäure, Korksäure, Azelainsäure, Sebazinsäure, Undecandisäure, Dodecandisäure, Brassylsäure, Tetradecandisäure, Pentadecandisäure, Hexadecandisäure, Octadecandisäure und Dimersäure mit 36 Kohlenstoffatomen. Geeignete cycloaliphatische Dicarbonsäuren sind die cis- und/oder trans-Cyclohexan-1,4-dicarbonsäure und/oder cis- und/oder trans-Cyclohexan-1,3-dicarbonsäure (CHDA).

Geeignete aliphatische Diamine mit 4 - 18 C-Atomen, die linear oder verzweigt vorliegen können, sind 1,4-Butandiamin, 1,5-Pentandiamin, 2-Methyl-1,5-pentandiamin (MPMD), 1,6-Hexandiamin, 1,7-Heptandiamin, 1,8-Octandiamin (OMDA), 1,9-Nonandiamin (NMDA), 2-Methyl-1,8-octandiamin (MODA), 2,2,4-Trimethylhexamethylendiamin (TMHMD), 2,4,4-Trimethylhexamethylendiamin (TMHMD), 5-Methyl-1,9-nonandiamin, 1,10-Decandiamin, 1,11-Undecandiamin, 2-Butyl-2-ethyl-1,5-pentandiamin, 1,12-Dodecandiamin, oder auch 1,13-Tridecandiamin, 1,14-Tetradecandiamin, 1,16-Hexadecandiamin, und 1,18-Octadecandiamin, oder Mischungen davon.

In untergeordneter Menge von vorzugsweise nicht mehr als 30 Mol-% (bezogen auf die Gesamtmenge der Diamine), besonders bevorzugt nicht mehr als 20 Mol-% können die Polyamide (A) neben den aliphatischen Diaminen mit 4 bis 12 Kohlenstoffatomen auch cycloaliphatische Diamine, beispielsweise 1,4-Cyclohexandiamin, 1,3-Bis-(aminomethyl)-cyclohexan (BAC), Isophorondiamin, Norbornandimethylamin, 4,4'-Diaminodicyclohexylmethan (PACM), 2-(4,4'-Diaminodicyclohexyl)propan (PACP) und 3,3'-Dimethyl-4,4'-bis(aminodicyclohexyl)methan (MACM) sowie auch araliphatische Diamine, wie z.B. para- und meta-Xylylendiamin (MXDA), enthalten.

Komponente A enthält vorzugsweise nicht mehr als 30 Mol-% (bezogen auf die Gesamtmenge der Monomeren) der gegebenenfalls zusätzlich vorhandenen Lactame und Aminosäuren. Geeignete Verbindungen sind beispielsweise Caprolactam (CL), α,ω-Aminocapronsäure, α,ω -Aminononansäure, α,ω-Aminoundecansäure (AUA), Laurinlactam (LL) und ω -Aminododecansäure (ADA).

Bevorzugte Vertreter für Komponente (A) sind die Polyamide: 6T/MPMDT, 6T/MPMDT/6I, 6T/6I/66, PA 4T/4I, PA 4T/6I, PA 5T/5I, PA 6T/6, PA 6T/6I, PA 6T/6I/6, PA 6T/66, 6T/610, 6T/612, PA 6T/10T, PA 6T/10I, PA 9T, PA 10T, PA 12T, PA 10T/10I, PA10T/106, PA10T/12, PA10T/11, PA 6T/9T, PA 6T/12T, PA 6T/10T/6I, PA 6T/6I/6, PA 6T/6I/12 sowie Mischungen davon. Insbesondere vorzugsweise ist das teilaromatische Polyamid der Komponente (A) ausgewählt aus der Gruppe: PA 6T/6I, 6T/MPMDT, PA 6T/10T, PA 6T/10T/6I, sowie Mischungen davon.

Erfindungsgemäß sind daher als hochschmelzende Polyamide der Komponente (A) insbesondere folgende teilaromatische Copolyamide bevorzugt:
- teilkristallines Polyamid 6T/6I mit 55 bis 75 Mol-% Hexamethylenterephthalamid-Einheiten und 25 bis 45 Mol-% Hexamethylenisophthalamid-Einheiten;
- teilkristallines Polyamid 6T/6I mit 62 bis 73 Mol-% Hexamethylenterephthalamid-Einheiten und 25 bis 38 Mol-% Hexamethylenisophthalamid-Einheiten;
- teilkristallines Polyamid 6T/6I mit 68 bis 72 Mol-% Hexamethylenterephthalamid-Einheiten und 28 bis 32 Mol-% Hexamethylenisophthalamid-Einheiten;
- teilkristallines Polyamid, hergestellt aus mindestens 52 Mol-% Terephthalsäure und höchstens 48 Mol-% Isophthalsäure, insbesondere aus 100 Mol-% Terephalsäure, sowie einer Mischung aus mindestens zwei Diaminen, ausgewählt aus der Gruppe Hexamethylendiamin, Nonandiamin, Methyloctandiamin, Decandiamin und Dodekandiamin;
- teilkristallines Polyamid, hergestellt aus 70-100 Mol-% Terephthalsäure und 0-30 Mol-% Isophthalsäure sowie einer Mischung aus Hexamethylendiamin und Dodecandiamin;
- teilkristallines Polyamid, hergestellt aus mindestens 52 Mol-% Terephthalsäure und höchstens 48 Mol-% Dekandisäure oder Dodekandisäure sowie mindestens einem Diamin ausgewählt aus der Gruppe Hexamethylendiamin, Nonandiamin, Methyloctandiamin, Decandiamin und Dodecandiamin;
- teilkristallines Polyamid 6T/10T mit 10 bis 60 Mol-%, bevorzugt 10 bis 40 Mol-% Hexamethylenterephthalamid-(6T)-und 40 bis 90 Mol-%, bevorzugt 60 bis 90 Mol-% Decamethylenterephthalamid-(10T)-Einheiten;
- teilkristallines Polyamid 6T/10T/6I mit 52 bis 90 Mol-%, vorzugsweise 52-72 Mol-% Hexamethylenterephthalamid-(6T)-, und 5 bis 43 Mol-%, vorzugsweise 10-30 Mol-% Hexamethylenisophthalamid-(6I)-Einheiten und 5 bis 43 Mol-%, vorzugsweise 18-38 Mol-% Decamethylenterephthalamid-(10T)-Einheiten;
- teilkristallines Polyamid 6T/6I/6 mit 60 bis 85 Mol-% Hexamethylenterephthalamid-(6T)- und 15 bis 40 Mol-% Hexamethylenisophthalamid-(6I)-Einheiten, das zusätzlich 5 - 15 Gew.-% Caprolactam enthält.

Bevorzugt handelt es sich bei der Komponente (A) um ein teilaromatisches Polyamid PA6T/6I mit einem Terephthalsäuregehalt von 62 bis 82 mol-% oder 66 bis 78 mol%, ganz besonders bevorzugt von 68 bis 74 Gew.-% bezogen auf die Summe der eingesetzten Dicarbonsäuren und mit einem Schmelzpunkt im Bereich von 270 bis 340°C, insbesondere im Bereich von 280 bis 325°C.

Weiterhin ist bevorzugt, wenn Komponente A
- eine Aminoendgruppenkonzentration im Bereich von 20 bis 250 mmol/kg, bevorzugt 30 bis 150 mmol/kg und besonders bevorzugt im Bereich von 35 bis 150 mmol/kg, und/oder
- eine Carboxylendgruppenkonzentration im Bereich von 20 bis 250 mmol/kg, bevorzugt 20 bis 200 mmol/kg und besonders bevorzugt im Bereich von 35 bis 150 mmol/kg, und/oder
- eine Konzentration der geblockten Endgruppen im Bereich von 10 bis 150 mmol/kg, bevorzugt 20 bis 90 mmol/kg und besonders bevorzugt im Bereich von 25 bis 80 mmol/kg, wobei insbesondere Aminoendgruppen mit monofunktionalen Carbonsäuren geblockt werden, bevorzugt von aromatischen Monocarbonsäuren, und/oder
- einen Phosphorgehalt im Bereich von 40 - 100 ppm, bevorzugt 50 - 90 ppm und insbesondere im Bereich von 60 bis 85 ppm aufweist.

Bezüglich des Polyamids PA 6T/6I (Komponente A) ist bevorzugt, wenn der Betrag der Differenz zwischen dem Gehalt an Aminoendgruppen und dem Gehalt an Carboxylgruppen höchstens 140 mmol/kg, insbesondere höchstens 120 mmol/kg beträgt, wobei die Summe der Amino- und Carboxylendgruppen bevorzugt wenigstens 180 mmol/kg, besonders bevorzugt wenigstens 200 mmol/kg beträgt.

Weiterhin liegt die Summe aller Endgruppen von Polyamid A, d.h. die Summe der Amino-, Carboxyl- und geblockten Endgruppen, bevorzugt im Bereich von 200 bis 300 mmol/kg, insbesondere im Bereich von 220 bis 280 mmol/kg.

In Polyamid A liegen 20-80 %, bevorzugt 30-60% und besonders bevorzugt 35-55% der Aminoendgruppen als geblockte Endgruppen vor, wobei die Aminoendgruppen bevorzugt durch Monocarbonsäuren geblockt sind, insbesondere durch aromatische Monocarbonsäuren.

Hinsichtlich der Eigenschaften der Formmassen sowie dessen Verarbeitung erweist sich als vorteilhaft, wenn das Polyamid (A) eine Lösungsviskosität (ηᵣₑₗ) zwischen 1.4 und 1.8, insbesondere bevorzugt zwischen 1.45 und 1.7, aufweist und/oder einen Glasübergangspunkt T_{g} oberhalb von 100°C, bevorzugt oberhalb von 110°C, insbesondere bevorzugt oberhalb von 120°C besitzt. Ebenfalls als vorteilhaft erweist es sich, wenn das teilkristalline Polyamid (A) eine Schmelztemperatur im Bereich von 270 - 340°C, insbesondere im Bereich von 280 - 330°C und eine Schmelzenthalpie im Bereich von 30-70 J/g, insbesondere im Bereich von 40-65 J/g hat.

Generell gesprochen ist bevorzugt, wenn die Komponente (A) ein teilaromatisches Polyamid auf Basis von Terephthalsäure mit einem Gehalt von Terephthalsäure von mindestens 52 mol-%, vorzugsweise von mindestens 54 mol-% und insbesondere vorzugsweise von mindestens 57 mol-% ist, vorzugsweise in Kombination mit Isophthalsäure als weitere Disäure in einem Anteil von wenigstens 18 mol-%, vorzugsweise von wenigstens 26 mol-%, jeweils bezogen auf die Summe der eingesetzten Dicarbonsäuren, und auf Basis eines oder mehrerer verschiedener linearer aliphatischer Diamine mit einer Kettenlänge im Bereich von 4-18, vorzugsweise im Bereich von 6-12 Kohlenstoffatomen, insbesondere vorzugsweise ausgewählt als 1,6-Hexamethylendiamin und/oder 1,10-Dekandiamin, wobei insbesondere vorzugsweise die Komponente (A) ausgewählt ist als 6T/6I, mit einem Gehalt an Terephthalsäure von 62 bis 82 mol-% bezogen auf die Summe der eingesetzten Dicarbonsäuren, ist.

Bei Komponente (B) handelt es sich um Polymere, die Epoxygruppen in der Seitenkette tragen. Bevorzugt werden Copolymere, aufgebaut aus Epoxygruppen-enthaltenden Monomeren und mindestens einem weiteren Monomeren, wobei beide Gruppen von Monomeren mindestens eine polymerisierbare Kohlenstoff-Kohlenstoff-Doppelbindung enthalten. Bevorzugt liegt die Konzentration von (B) im Bereich von 3 bis 12 Gew.-%, insbesondere im Bereich von 3 bis 11 oder 3 bis 10 Gew.-% bezogen auf die Summe der Komponenten (A) und (B). Unterhalb von 1 Gew.-% ist die Wirkung von Komponente (B) gering, so dass die Vorteile von Komponente (B) in den Formmassen kaum zum Tragen kommen, oberhalb von 15 Gew.-% nimmt die Steifigkeit stark ab und die Formmasse lässt sich aufgrund einer zu hohen Schmelzviskosität (zu niedrige MVR-Werte) nicht mehr ausreichend gut verarbeiten. Es kann sich dabei auch um Terpolymere handeln.

Bevorzugte Epoxygruppen-enthaltende Monomere sind Glycidylacrylat und Glycidylmethacrylat. Die weiteren Monomere mit C-C-Doppelbindung sind bevorzugt ausgewählt aus Alkenen (acyclische Alkene, Cycloalkene, Polyene), Acryl- und Vinylmonomeren, wobei acyclische Alkene mit 2 bis 10 Kohlenstoffatomen, Acrylsäureester und Vinylacetat besonders bevorzugt werden.

Somit werden als Komponente (B) bevorzugt Copolymere aus Glycidylacrylat und/oder Glycidylmethacrylat und mindestens einem weiteren ungesättigten Monomeren, das wenigstens eine nicht-aromatische Kohlenstoff-Kohlenstoff-Doppelbindung enthält, d.h. es handelt sich um ein olefinisch ungesättigtes Monomer, verwendet. Bevorzugtermassen ist Komponente (B) ein Copolymer aus Glycidylacrylat und/oder Glycidylmethacrylat und mindestens einem weiteren olefinisch ungesättigten Monomeren, wobei die Konzentration von Glycidylacrylat und Glycidylmethacrylat im Bereich von 5 bis 15 Gew.-%, bevorzugt im Bereich von 6 bis 14 Gew.-% und besonders bevorzugt im Bereich von 7 bis 13 Gew.-% bezogen auf das Copolymer liegt. Ist weniger als 5 Gew.-% Glycidylacrylat oder Glycidylmethacrylat im Copolymer enthalten, ist die Reaktivität von Komponente B zu gering und es resultieren nicht die gewünschten mechanischen Eigenschaften. Übersteigt die Glycidylacrylat- oder Glycidylmethacrylat-Konzentration der Komponente B eine Konzentration von 15 Gew.-%, wird die Verarbeitbarkeit, die Oberflächengüte und die mechanischen Eigenschaften zunehmend schlechter.

Weiterhin wird bevorzugt, wenn das weitere olefinisch ungesättigte Monomer ein einfach ungesättigtes Olefin, bevorzugt ein α-Olefin, mit 2 bis 8 Kohlenstoffatomen oder ein (Meth)acrylsäureester oder ein Vinylmonomer ist. Insbesondere enthält das Copolymer (B) neben Glycidylacrylat und/oder Glycidylmethacrylat mindestens ein weiteres olefinisch ungesättigte Monomer ausgewählt aus der Gruppe bestehend aus Ethen, Propen, 1-Buten, 2-Buten, 1-Penten, 2-Penten, Methy(meth)lacrylat, Ethyl(meth)acrylat, Propyl(meth)acrylat, Isopropyl(meth)acrylat, Butyl(meth)acrylat, Acrylamid, Acrylnitril und Vinylacetat. Besonders bevorzugt ist die Komponente (B) ein Copolymer aus Glycidylmethacrylat und Ethen sowie gegebenenfalls weiteren olefinisch ungesättigten Monomeren, wobei der Gehalt an Ethen im Bereich von 50 bis 95 Gew.-%, bevorzugt im Bereich von 65 bis 93 Gew.-% und besonders bevorzugt im Bereich von 80 - 95 oder 85 bis 94 liegt.

Konkrete Beispiele sind Copolymere aus Ethylen und Glycidylacrylat; Ethylen und Glycidylmethacrylat; Ethylen, Methylmethacrylat und Glycidylmethacrylat; Ethylen, Methylacrylat und Glycidylmethacrylat; Ethylen, Ethylacrylat und Glycidylmethacrylat; Ethylen, Butylacrylat und Glycidylmethacrylat; Ethylen, Vinylacetat und Glycidylmethacrylat.

Besonders bevorzugt werden Copolymere
- aus Ethylen und Glycidylmethacrylat mit einem Gehalt an Glycidylmethacrylat von 7 bis 14 Gew.-% bezogen auf die Summe aller Monomere im Copolymer;
- aus 71 - 88 Gew.-% Ethylen, 5 - 15 Gew.-% Vinylacetat und 7 - 14 Gew.-% Glycidylmethacrylat bezogen auf die Summe aller Monomere im Copolymer;
- aus 56 - 73 Gew.-% Ethylen, 20 - 30 Gew.-% Methylacrylat und 7 - 14 Gew.-% Glycidylmethacrylat bezogen auf die Summe aller Monomere im Copolymer;
- aus 51 - 78 Gew.-% Ethylen, 15 - 35 Gew.-% Butylacrylat und 7 - 14 Gew.-% Glycidylmethacrylat bezogen auf die Summe aller Monomere im Copolymer.

Generell gesprochen handelte sich also bevorzugtermassen bei Komponente (B) um ein Copolymer aus Glycidylacrylat und/oder Glycidylmethacrylat und mindestens einem weiteren ungesättigten Monomeren mit wenigstens einer Kohlenstoff-Kohlenstoff-Doppelbindung, wobei die Konzentration von Glycidylacrylat, Glycidylmethacrylat oder der Mischung davon bevorzugtermassen im Bereich von 5 bis 15 Gew.-%, bevorzugt im Bereich von 7 bis 14 Gew.-%, bezogen auf die Summe aller Monomere im Copolymer, liegt. Das weitere ungesättigte Monomer kann dabei ein einfach ungesättigtes Olefin sein, bevorzugt ein α-Olefin, mit 2 bis 8 Kohlenstoffatomen und/oder ein (Meth)acrylsäureester mit 4 bis 12 Kohlenstoffatomen und/oder Vinylacetat.

Das Copolymer (B) enthält vorzugsweise neben Glycidylacrylat und/oder Glycidylmethacrylat mindestens ein weiteres ungesättigtes Monomer ausgewählt aus der Gruppe bestehend aus: Ethen, Propen, 1-Buten, 2-Buten, 1-Penten, 2-Penten, Methy(meth)lacrylat, Ethyl(meth)acrylat, Propyl(meth)acrylat, Isopropyl(meth)acrylat, Butyl(meth)acrylat, Vinylacetat, oder Kombinationen davon.

Gemäß einer ganz bevorzugten Ausführungsform handelt es sich bei Komponente (B) um ein Copolymer aus Glycidylmethacrylat und Ethen sowie gegebenenfalls weiteren olefinisch ungesättigten Monomeren, wobei der Gehalt an Ethen im Bereich von 50 bis 95 Gew.-%, bevorzugt im Bereich von 65 bis 93 Gew.-% liegt.

Vorzugsweise liegt bei Komponente (B) die Schmelze-Massefliessrate (melt flow rate, MFR) bestimmt nach ISO 1133 bei 190°C und einer Auflage von 2.16 kg im Bereich von 2-20 g/10 min, bevorzugtermassen im Bereich von 3-15 g/10 min.

Besonders bevorzugte Beispiele für erfindungsgemäß einsetzbare Komponenten (B) sind die von Arkema unter dem Produktnamen Lotader AX erhältlichen Systeme, insbesondere vom Typ AX8840 (Copolymer aus 92% Ethen und 8% Glycidylmethacrylat) oder vom Typ AX8900 (Copolymer aus 67% Ethen, 25% Methylacrylat und 8% Glycidylmethacrylat). Ebenfalls bevorzugt sind Produkte vom Typ Elvaloy von Dupont, insbesondere Elvaloy PTW (Copolymer aus 67% Ethen, 28% Butylacrylat und 5% Glycidylmethacrylat), sowie Produkte vom Typ Igetabond erhältlich von Sumitomo, insbesondere Igetabond E (Copolymer aus 88% Ethen und 12% Glycidylmethacrylat). Des Weiteren enthalten die Formmassen faserförmige Verstärkungsstoffe, bevorzugt in einer Konzentration von 15 bis 65 Gew.-% **(Komponente (C)),** in Form von Fasern, wie z.B. Glasfasern oder Kohlenstofffasern. Bevorzugt enthalten die Formmassen 20 bis 60 Gew.-%, insbesondere 25 bis 55 oder 30 bis 45 Gew.-% faserförmige Verstärkungsstoffe. Bevorzugtermassen wird Komponente (C) in Form von Glasfasern, die z.B. in Form von sogenannten Kurzfasern (z.B. Schnittglas mit einer Länge von 0.2-20 mm) oder Endlosfasern (Rovings) verwendet werden, eingesetzt. Die Glasfasern können unterschiedliche Querschnittsflächen aufweisen, wobei Glasfasern mit kreisförmigem Querschnitt (runde Fasern) und mit nicht-kreisförmigem Querschnitt (flache Fasern) bevorzugt sind.

Eine bevorzugte Ausführungsform der Polyamidformmasse nach der Erfindung zeichnet sich dadurch aus, dass die Komponente (C) ausschliesslich aus Glasfasern bestehen, die im Bereich von 20 - 60 Gew.-%, bevorzugt im Bereich von 25 - 55 oder 25 - 45 Gew.-%, bezogen auf die Formmasse vorliegen.

Glasfasern mit kreisförmigem Querschnitt, also runde Glasfasern, haben einen Durchmesser im Bereich von 3-20 µm, bevorzugt im Bereich von 5-13 µm und besonders bevorzugt im Bereich von 5-10 µm. Sie werden bevorzugt als Kurzglasfaser (Schnittglas mit einer Länge von 0.2 bis 20 mm, bevorzugt 2-12 mm) eingesetzt.

Bei den flachen Glasfasern, also Glasfasern mit nicht-kreisförmiger Querschnittsfläche, werden solche mit einem Abmessungsverhältnis von der Hauptquerschnittsachse zur senkrecht darauf stehenden Nebenquerschnittsachse von mehr als 2.5, bevorzugt im Bereich von 2.5 bis 6, insbesondere im Bereich von 3 bis 5 bevorzugt eingesetzt. Diese sogenannten flachen Glasfasern weisen eine ovale, elliptische, mit Einschnürung(en) versehene elliptische (sogenannte Kokon- oder cocoon-Faser), polygonale, rechteckige oder nahezu rechteckige Querschnittsfläche auf. Ein weiteres kennzeichnendes Merkmal der eingesetzten flachen Glasfasern besteht darin, dass die Länge der Hauptquerschnittsachse bevorzugt im Bereich von 5 bis 35 µm, insbesondere im Bereich von 12 bis 30 µm und die Länge der Nebenquerschnittsachse im Bereich von 3 bis 17 µm, insbesondere im Bereich von 4 bis 10 µm liegt. Dabei weisen die flachen Glasfasern eine möglichst hohe Packungsdichte auf, d.h. die Glasquerschnittsfläche füllt ein gedachtes, den Glasfaserquerschnitt möglichst exakt umgebendes Rechteck zu mindestens 70%, bevorzugt mindestens 80% und insbesondere bevorzugt zu mindestens 85% aus.

Zur Verstärkung der erfindungsgemässen Formmassen können auch Mischungen von Glasfasern mit kreisförmigem und nicht-kreisförmigem Querschnitt verwendet werden, wobei der Anteil an flachen Glasfasern bevorzugtermassen überwiegt, d.h. mehr als 50 Gew.-% der Gesamtmasse der Fasern ausmacht.

Vorzugsweise ist die Komponente (C) ausgewählt aus der Gruppe bestehend aus: E-Glasfasern (diese bestehen gemäss ASTM D578-00 aus 52-62% Siliciumdioxid, 12-16% Aluminiumoxid, 16-25% Calciumoxid, 0-10% Borax, 0-5% Magnesiumoxid, 0-2% Alkalioxide, 0-1.5% Titandioxid und 0-0.3% Eisenoxid; bevorzugt haben sie eine Dichte von 2.58±0.04 g/cm3, einen Zug-E-Modul von 70-75 GPa, eine Zugfestigkeit von 3000-3500 MPa und eine Reissdehnung von 4.5-4.8%), A-Glasfasern (63-72% Siliciumdioxid, 6-10% Calciumoxid, 14-16% Natrium- und Kaliumoxid, 0-6% Aluminiumoxid, 0-6% Boroxid, 0-4% Magnesiumoxid), C-Glasfasern (64-68% Siliciumdioxid, 11-15% Calciumoxid, 7-10% Natrium- und Kaliumoxid, 3-5% Aluminiumoxid, 4-6% Boroxid, 2-4% Magnesiumoxid), D-Glasfasern (72-75% Siliciumdioxid, 0-1% Calciumoxid, 0-4% Natrium- und Kaliumoxid, 0-1% Aluminiumoxid, 21-24% Boroxid), Basaltfasern (Mineralfaser mit der ungefähren Zusammensetzung: 52% SiO₂, 17% Al₂O₃, 9% CaO, 5% MgO, 5% Na₂O, 5% Eisenoxid sowie weiteren Metalloxiden), AR-Glasfasern (55-75% Siliciumdioxid, 1-10% Calciumoxid, 11-21% Natrium- und Kaliumoxid, 0-5% Aluminiumoxid, 0-8% Boroxid, 0-12%Titandioxid, 1-18% Zirkonoxid, 0-5% Eisenoxid) sowie Mischungen davon.

Eine bevorzugte Ausführungsform der Komponente (C) sind hochfeste Glasfasern beruhend auf dem ternären System Siliciumdioxid-Aluminiumoxid-Magnesiumoxid oder auf dem quaternären System Siliciumdioxid-Aluminiumoxid-Magnesiumoxid-Calciumoxid, wobei die Summe der Gehalte von Siliciumdioxid, Aluminiumoxid und Magnesiumoxid wenigstens 78 Gew.-%, bevorzugt wenigstens 87% und besonders bevorzugt wenigstens 92% bezogen auf die gesamte Glaszusammensetzung beträgt. Konkret wird bevorzugt eine Zusammensetzung von 58-70 Gew.-% Siliciumdioxid (SiO₂), 15-30 Gew.-% Aluminiumoxid (Al₂O₃), 5-15 Gew.% Magnesiumoxid (MgO), 0-10 Gew.-% Calciumoxid (CaO) und 0-2 Gew.-% weitere Oxide, wie z.B. Zirkoniumdioxid (ZrO₂), Boroxid (B₂O₃), Titandioxid (TiO₂) oder Lithiumoxid (Li₂O) eingesetzt. In einer weiteren Ausführungsform besitzt die hochfeste Glasfaser eine Zusammensetzung von 60-67 Gew.-% Siliciumdioxid (SiO₂), 20-28 Gew.-% Aluminiumoxid (Al₂O₃), 7-12 Gew.-% Magnesiumoxid (MgO), 0-9 Gew.-% Calciumoxid (CaO) sowie 0-1.5 Gew.-% weitere Oxide, wie z.B. Zirkoniumdioxid (ZrO₂), Boroxid (B₂O₃), Titandioxid (TiO₂), Lithiumoxid (Li₂O).

Insbesondere ist bevorzugt, wenn die hochfeste Glasfaser die nachfolgende Zusammensetzung aufweist: 62-66 Gew.-% Siliciumdioxid (SiO₂), 22-27 Gew.-% Aluminiumoxid (Al₂O₃), 8-12 Gew.-% Magnesiumoxid (MgO), 0- 5Gew.-% Calciumoxid (CaO), 0-1 Gew.-% weitere Oxide, wie z.B. Zirkoniumdioxid (ZrO₂), Boroxid (B₂O₃), Titandioxid (TiO₂), Lithiumoxid (Li₂O).

Die hochfeste Glasfaser besitzt vorzugsweise eine Zugfestigkeit von grösser oder gleich 3700 MPa, vorzugsweise von wenigstens 3800 oder 4000 MPa, eine Reissdehnung von mindestens 4.8%, vorzugsweise von wenigstens 4.9 oder 5.0 %, und einen Zug-E-Modul von grösser 75 GPa, vorzugsweise von mehr als 78 oder 80 GPa, wobei diese Glaseigenschaften an Einzelfasern (pristine single filament) mit einem Durchmesser von 10 µm und eine Länge von 12.7 mm bei einer Temperatur von 23°C und einer relativen Luftfeuchte von 50% zu bestimmen sind. Konkrete Beispiele für diese hochfesten Glasfasern der Komponente (C) sind S-Glasfasern von Owens Corning mit 995-Schlichte, T-Glasfasern von Nittobo, HiPertex von 3B, HS4-Glasfasern von Sinoma Jinjing Fiberglass, R-Glasfaern von Vetrotex sowie S-1- und S-2-Glasfasern von AGY.

Die erfindungsgemäss z.B. als Roving eingesetzten Glasfasern (Endlosfasern) weisen einen Durchmesser (bei runden Glasfasern) bzw. eine Nebenquerschnittsachse (bei flachen Glasfasern) von 8 bis 20 µm, bevorzugt von 12 bis 18 µm auf, wobei der Querschnitt der Glasfasern rund, oval, elliptisch, elliptisch mit Einschnürung(en) versehen, polygonal, rechteckig oder nahezu rechteckig sein kann. Besonders bevorzugt werden sogenannte flache Glasfasern mit einem Verhältnis der Querschnittsachsen, d.h. ein Verhältnis von Haupt- zur Nebenquerschnittsachse von 2.5 bis 5. Die Endlosfasern können aus den oben beschriebenen Glassorten hergestellt sein, wobei Endlosfasern auf Basis von E-Glas und den hochfesten Glassorten bevorzugt sind. Diese Endlosfasern werden in die erfindungsgemässen Polyamidformmassen durch bekannte Verfahren zur Herstellung von langfaserverstärktem Stäbchengranulat eingearbeitet, insbesondere durch Pultrusionsverfahren, bei denen der endlose Faserstrang (Roving) mit der Polymerschmelze vollständig durchtränkt und anschliessend abgekühlt und geschnitten wird. Das auf diese Art und Weise erhaltene langfaserverstärkte Stäbchengranulat, das bevorzugt eine Granulatlänge von 3 bis 25 mm, insbesondere von 4 bis 12 mm aufweist, kann mit den üblichen Verarbeitungsverfahren (wie z. B. Spritzgiessen, Pressen) zu Formteilen weiterverarbeitet werden.

Bevorzugt werden als Komponente (C) Glasfasern aus E-Glas, mit nicht-kreisförmigem Querschnitt (flache Fasern) und mit einem Achsenverhältnis der Hauptquerschnittsachse zur Nebenquerschnittsachse von wenigstens 2.5, und/oder hochfeste Glasfasern mit kreisförmigem oder nicht-kreisförmigem Querschnitt und einer Glaszusammensetzung, beruhend im Wesentlichen auf den Komponenten Siliciumdioxid, Aluminiumoxid und Magnesiumoxid, wobei der Anteil an Magnesiumoxid (MgO) 5-15 Gew.-% und der Anteil an Calciumoxid 0 - 10 Gew.-% beträgt.

Die Glasfasern der Komponente (C) weisen bevorzugt als flache E-Glasfasern eine Dichte von 2.54 - 2.62 g/cm³, einen Zug-E-Modul von 70 - 75 GPa, eine Zugfestigkeit von 3000 - 3500 MPa und eine Reissdehnung von 4.5 - 4.8% auf, wobei die mechanischen Eigenschaften an Einzelfasern mit einem Durchmesser von 10 µm und eine Länge von 12.7 mm bei 23°C und einer relativen Luftfeuchte von 50% bestimmt wurden.

Die erfindungsgemässen Glasfasern können mit einer für Thermoplaste, insbesondere für Polyamid geeigneten Schlichte, enthaltend einen Haftvermittler auf Basis einer Amino- oder Epoxysilanverbindung, versehen sein.

Generell gesprochen handelt es sich gemäß einer weiteren bevorzugten Ausführungsform der Erfindung also bei der Komponente (C), welche vorzugsweise in der Formmasse in einem Anteil im Bereich von 20-60 Gew.-%, insbesondere vorzugsweise im Bereich von 25-55 Gew.-% vorliegt, um Glasfasern, Kohlefasern, oder eine Mischung solcher Fasern handelt, wobei es sich vorzugsweise um Glasfasern handelt, insbesondere bevorzugt um Glasfasern mit kreisförmiger Querschnittsfläche, Glasfasern mit nicht-kreisförmiger Querschnittsfläche, oder eine Mischung solcher Glasfasern, wobei insbesondere bevorzugt Glasfasern mit kreisförmiger Querschnittsfläche einen Durchmesser im Bereich von 3-12 µm, vorzugsweise im Bereich von 5-13 µm und insbesondere bevorzugt im Bereich von 5-12 µm aufweisen, und Glasfasern mit nicht-kreisförmiger Querschnittsfläche vorzugsweise ein Abmessungsverhältnis von der Hauptquerschnittsachse zur senkrecht darauf stehenden Nebenquerschnittsachse von mehr als 2.5, vorzugsweise im Bereich von 2.5 - 6 oder 3 - 5 aufweisen, wobei die Hauptquerschnittsachse bevorzugtermassen eine Länge im Bereich von 5 - 35 µm, bevorzugt im Bereich von 12 - 30 µm und die Nebenquerschnittsachse bevorzugtermassen eine Länge im Bereich von 3-17 µm, vorzugsweise im Bereich von 4-10 µm aufweist.

Als **Komponente (D)** enthalten die erfindungsgemäßen thermoplastischen Formmassen mindestens einen Wärmestabilisator, bevorzugt in einer Konzentration von 0.1 bis 3 Gew.-%, besonders bevorzugt von 0.15 bis 2 Gew.-% oder 0.17 bis 1.5 Gew.%.

In einer bevorzugten Ausführungsform sind die Wärmestabilisatoren ausgewählt aus der Gruppe bestehend aus
- Verbindungen des ein- oder zweiwertigen Kupfers, z.B. Salze des ein- oder zweiwertigen Kupfers mit anorganischen oder organischen Säuren oder ein- oder zweiwertigen Phenolen, die Oxide des ein- oder zweiwertigen Kupfers, oder die Komplexverbindungen von Kupfersalzen mit Ammoniak, Aminen, Amiden, Lactamen, Cyaniden oder Phosphinen, bevorzugt Cu(I)- oder Cu(II)-Salze der Halogenwasserstoffsäuren, der Cyanwasserstoffsäuren oder die Kupfersalze der aliphatischen Carbonsäuren. Besonders bevorzugt sind die einwertigen Kupferverbindungen CuCl, CuBr, CuI, CuCN und Cu₂O, sowie die zweiwertigen Kupferverbindungen CuCl₂, CuSO₄, CuO, Kupfer(II)acetat oder Kupfer(II)stearat. Sofern eine Kupferverbindung verwendet wird, beträgt vorzugsweise die Menge an Kupfer 0.02 bis 0.5, insbesondere 0.03 bis 0.35 und besonders bevorzugt 0.05 bis 0.25 Gew.-%, bezogen auf die Summe der Komponenten (A) bis (E), d.h. bezogen auf die Formmasse.

Die Kupferverbindungen sind handelsüblich bzw. ihre Herstellung ist dem Fachmann bekannt. Die Kupferverbindung kann als solche oder in Form von Konzentraten eingesetzt werden. Unter Konzentrat ist dabei ein Polymer, vorzugsweise gleicher chemischer Natur wie Komponente (A1) oder (A2), zu verstehen, welches das Kupfersalz in hoher Konzentration enthält. Der Einsatz von Konzentraten ist ein übliches Verfahren und wird besonders häufig dann angewandt, wenn sehr geringe Mengen eines Einsatzstoffes zu dosieren sind. Vorteilhafterweise werden die Kupferverbindungen in Kombination mit weiteren Metallhalogeniden, insbesondere Alkalihalogeniden, wie Nal, KI, NaBr, KBr, eingesetzt, wobei das molare Verhältnis von Metallhalogenid zu Kupferhalogenid 0.5 bis 20, bevorzugt 1 bis 10 und besonders bevorzugt 3 bis 7 beträgt.
- Stabilisatoren auf Basis sekundärer aromatischer Amine, wobei diese Stabilisatoren vorzugsweise in einer Menge von 0.2 bis 2, bevorzugt von 0.2 bis 1.5 Gew.-% vorliegen,
- Stabilisatoren auf Basis sterisch gehinderter Phenole, wobei diese Stabilisatoren vorzugsweise in einer Menge von 0.1 bis 1.5, bevorzugt von 0.2 bis 1 Gew.-% vorliegen, und
- Phosphiten und Phosphoniten, sowie
- Mischungen der vorstehend genannten Stabilisatoren.

Besonders bevorzugte Beispiele für erfindungsgemäß einsetzbare Stabilisatoren auf Basis sekundärer aromatischer Amine sind Addukte aus Phenylendiamin mit Aceton (Naugard A), Addukte aus Phenylendiamin mit Linolen, Naugard 445, N,N'-Dinaphthyl-p-phenylendiamin, N-Phenyl-N'-cyclohexyl-p-phenylendiamin oder Mischungen von zwei oder mehreren davon

Bevorzugte Beispiele für erfindungsgemäß einsetzbare Stabilisatoren auf Basis sterisch gehinderter Phenole sind N,N'-Hexamethylen-bis-3-(3,5-di-tert-butyl-4-hydroxyphenyl)-propionamid, Bis-(3,3-bis-(4'-hydroxy-3'-tert-butylphenyl)-butansäure)-glykolester, 2,1'-Thioethylbis-(3-(3,5-di.tert-butyl-4-hydroxyphenyl)-propionat, 4-4'-Butyliden-bis-(3-methyl-6-tert.-butylphenol), Triethylenglykol-3-(3-tert-butyl-4-hydroxy-5-methylphenyl)-propionat oder Mischungen von zweien oder mehreren dieser Stabilisatoren.

Bevorzugte Phosphite und Phosphonite sind Triphenylphosphit, Diphenylalkylphosphit, Phenyldialkylphosphit, Tris(nonylphenyl)phosphit, Trilaurylphosphit, Trioctadecylphosphit, Distearylphentaerythritoldiphosphit, Tris(2,4-di-tert-butylphenyl)phosphit, Diisodecylpentaerythritoldiphosphit, Bis(2,4-di-tert-butylphenyl)pentaerythritoldiphosphit, Bis(2,6-di-tert-butyl-4-methylphenyl)-pentaerythritoldiphosphit, Diisodecyloxypentaerythritoldiphosphit, Bis(2,4-di-tert-butyl-6-methylphenyl)pentaerythritoldiphosphit, Bis(2,4,6-tris-(tert-butylphenyl))pentaerythritoldiphosphit, Tristearylsorbitoltriphosphit, Tetrakis¬(2,4-di-tert-butylphenyl)-4,4'-biphenylendiphospho¬nit, 6-Isooctyloxy-2,4,8,10-tetra-tert-butyl-12H-dibenz-[d,g]-1,3,2-dioxaphosphocin, 6-Fluoro-2,4,8,10-tetra-tert-butyl- 12-methyl-dibenz[d,g]-1,3,2-dioxaphosphocin, Bis(2,4-di-tert- butyl-6-methylphenyl)methylphosphit und Bis(2,4-di-tert-butyl-6-methylphenyl)ethylphosphit. Insbesondere werden bevorzugt Tris[2-tert-butyl-4-thio(2'-methyl-4'-hydroxy-5'-tert-butyl)-phenyl-5-methyl]phenyl-phosphit und Tris(2,4-di-tert-butylphenyl)phosphit.

Insbesondere bevorzugt wird eine Wärmestabilisierung ausschließlich auf Basis von CuI und KI. Neben dem Zusatz von Kupfer oder Kupferverbindungen können noch weitere Übergangsmetallverbindungen, insbesondere Metallsalze oder Metalloxide der Gruppe VB, VIB, VIIB oder VIIIB des Periodensystems verwendet werden. Darüber hinaus werden der erfindungsgemäßen Formmasse bevorzugt Übergangsmetalle der Gruppe VB, VIB, VIIB oder VIIIB des Periodensystems, wie z.B. Eisen- oder Stahlpulver, zugesetzt. Generell gesprochen handelt es sich also gemäß einer weiteren bevorzugten Ausführungsform bei der Komponente (D), welche vorzugsweise in der Formmasse in einem Anteil im Bereich von 0.2-2 Gew.-%, bevorzugt im Bereich von 0.25-1.5 Gew.-% vorliegt, um ein System ausgewählt ist aus der folgenden Gruppe: Verbindungen des ein- oder zweiwertigen Kupfers, Stabilisatoren auf Basis sekundärer aromatischer Amine, Stabilisatoren auf Basis sterisch gehinderter Phenole, Phosphite, Phosphonite, sowie Mischungen davon.

**Komponente (E)** umfasst als von den Komponenten (C) und (D) verschiedene Additive und/oder Hilfsmittel und/oder von (A) und (B) verschiedene Polymere bevorzugt weitere Füllstoffe (E1) verschieden von (C), weitere Polymere (E2) verschieden von (A) und (B), Zusatzstoffe (E3) sowie Flammschutzmittel (E4).

Optional können weitere Füllstoffe als Komponente (**E1**), verschieden von den faserförmigen Verstärkungsstoffen der Komponente (B) den Formmassen in Mengen von 0 bis 25 Gew.-% bezogen auf die Formmasse zugesetzt sein. Die Komponente (E1) kann des weiteren Füllstoffe, gegebenenfalls in oberflächenbehandelter Form enthalten, ausgewählt aus der folgenden Gruppe: Talk, Glimmer, Silikat, Quarz, Titandioxid, Wollastonit, Kaolin, amorphe Kieselsäuren, Magnesiumcarbonat, Magnesiumhydroxid, Kreide, Kalk, Feldspat, Bariumsulfat, Voll- oder Hohl-Glaskugeln oder gemahlenes Glas, insbesondere gemahlene Glasfasern, dauerhaft magnetische bzw. magnetisierbare Metallverbindungen und/oder Legierungen, sowie Mischungen der Elemente aus dieser Gruppe. Besonders bevorzugt als Füllstoff werden Mikroglaskugeln mit einem mittleren Durchmesser im Bereich von 5 bis 100 µm, da diese dem Formteil tendenziell isotrope Eigenschaften verleihen und damit die Herstellung von Formteilen mit niedrigen Verzug erlauben.

Die Formmassen können weitere Polymere **(E2)** verschieden von (A) und (B) enthalten, wobei unmodifizierte Schlagzähmodifikatoren, aliphatische Polyamide, insbesondere PA6 und amorphe, teilaromatische Polyamide, insbesondere PA 6I/6T bevorzugt sind. Weiterhin können die Formmassen auch Mischungen aus den beschriebenen Glycidylacrylat- und/oder Glycidylmethacrylat-enthaltenden Copolymeren (Komponente B) und unmodifizierten, d.h. nicht gepfropften Schlagzähmodifikatoren (E2) enthalten, wobei das Verhältnis von B zu E2 bevorzugt im Bereich von 5:1 bis 1:1 liegt.

Bevorzugte unmodifizierte Schlagzähmodifikatoren sind Polyolefine auf Basis von α-Olefinen, insbesondere Ethylen, Propylen und/oder Butylen, Styrol-Copolymere, insbesondere SEBS, SEP-Blockcopolymere sowie Polyolefin-alkyl(meth)acrylat)-copolymere. Besonders bevorzugt werden Copolymere aus Ethylen und Methylacrylat, Ethylen und Methylmethacrylat und Ethylen und Butylacrylat.

Insbesondere wird aber bevorzugt, wenn keine weitere, nicht der Definition der Komponente (B) entsprechende Schlagzähmodifikator-Komponente, also auch nicht Komponente E2, in Kombination mit (B) verwendet wird.

Die erfindungsgemäßen Formmassen können weitere Zusatzstoffe **(E3),** wie z. B. aus der Gruppe der Lichtschutzmittel, UV-Stabilisatoren, UV-Absorber oder UV-Blocker, Gleitmittel, Farbstoffe, Nukleierungsmittel, metallische Pigmente, Antistatika, Leitfähigkeitsadditive, Entformungsmittel, optischen Aufheller, oder Gemische der genannten Zusatzstoffe enthalten. Als Antistatika können in den erfindungsgemäßen Formmassen z. B. Ruß und/oder Kohlenstoffnanoröhrchen eingesetzt werden. Die Verwendung von Ruß kann aber auch zur Verbesserung der Schwarzfärbung der Formmasse dienen.

Die erfindungsgemässen Formmassen enthalten gegebenenfalls zusätzlich Flammschutzmittel als Komponente **(E4),** insbesondere halogenfreie, phosphorhaltige Flammschutzmittel, so dass die Formmassen die Brandschutzklassierung V0 gemäss UL94 erreichen. Bevorzugt werden die Flammschutzmittel (E4) in einer Konzentration von 8 bis 18, bevorzugt 9 bis 16 und besonderes bevorzugt 10 bis 15 Gew.-% bezogen auf die Formmasse eingesetzt.

Vorzugsweise handelt es sich bei den Flammschutzmitteln um Phosphazene, Phosphinsäuresalze und/oder Diphosphinsäuresalze sowie optional eingesetzte stickstoffhaltige Synergisten, wobei Letztere vorzugsweise ausgewählt sind aus Melamin oder Kondensationsprodukten des Melamins, wie insbesondere Melem, Melam, Melon, oder Umsetzungsprodukte von Melamin mit Polyphosphorsäure oder Umsetzungsprodukte von Kondensationsprodukten des Melamins mit Polyphosphorsäure oder Gemische davon, insbesondere Melaminpolyphosphat.

Bevorzugt wird ein Flammschutzmittel der Komponente (E4) in Form des Metallsalzes der Phosphinsäure und/oder der Diphosphinsäure und/oder deren Polymere, worin das Metallion aus der 2. oder 3. Haupt- oder Nebengruppe des Periodensystems ist und die organischen Reste bevorzugt C1-C10-Alkyl, linear oder verzweigt und/oder Aryl, Alkylen, Arylen, Alkylarylen oder Arylalkylen sind. Als Metallion wird insbesondere Aluminum, Calcium, Barium und Zink bevorzugt.

Gemäß einer bevorzugten Ausführungsform ist die Formmasse frei von Flammschutzmitteln, insbesondere frei von Phosphor-haltigen Flammschutzmitteln. Generell gesprochen handelt es sich also gemäß einer weiteren bevorzugten Ausführungsform bei der Komponente (E), welche vorzugsweise in der Formmasse im Bereich von 0-15 Gew.-%, insbesondere vorzugsweise im Bereich von 2-10 Gew.-% enthalten ist, um Füllstoffe, gegebenenfalls in oberflächenbehandelter Form, ausgewählt aus der folgenden Gruppe handelt: Talk, Glimmer, Silikat, Quarz, Titandioxid, Wollastonit, Kaolin, amorphe Kieselsäuren, Magnesiumcarbonat, Magnesiumhydroxid, Kreide, Kalk, Feldspat, Bariumsulfat, Voll- oder Hohl-Glaskugeln oder gemahlenes Glas, insbesondere gemahlene, flache Glasfasern, dauerhaft magnetische bzw. magnetisierbare Metallverbindungen und/oder Legierungen, Flammschutzmittel, insbesondere halogen-freie Flammschutzmittel, aliphatische Polyamide, insbesondere Polyamid 6 und/oder amorphe, teilaromatische Polyamide, insbesondere PA 6I/6T, Lichtschutzmittel, UV-Stabilisatoren, UV-Absorber oder UV-Blocker, Gleitmittel, Farbstoffe, Nukleierungsmittel, metallische Pigmente, Antistatika, Leitfähigkeitsadditive, Entformungsmittel, optische Aufheller, sowie Mischungen davon.

Die erfindungsgemäßen thermoplastischen Formmassen zeichnen sich durch eine gute Wärmestandfestigkeit, gute mechanische Eigenschaften längs und quer zur Verarbeitungsrichtung und einer hohen Schlag- und Kerbschlagzähigkeit aus. Diese Formmassen eignen sich daher zur Herstellung von Formkörpern jeglicher Art insbesondere für die nachfolgend angeführten Anwendungen. Besonders geeignet sind die erfindungsgemässen Formmassen für Anwendungen bei denen die Formkörper oder Bauteile hohen Belastungen quer zur Faserrichtung (gemeint ist die Verstärkungsfaser (C)), insbesondere einer Schlagbeanspruchung ausgesetzt sind oder hohe Bruchenergien aufweisen müssen. Dies gilt z.B. für hochbeanspruchte Automobilteile wie Gurtsysteme, Tür und Heckklappenschlösser, Teile der Hand- oder Automatikschaltung und des Bremssystems, Befestigungselemente wie Nägel und Schrauben, Druckventile, Hydraulikbauteile, Ventilblöcke, Armaturen, Haushaltsgeräte, Motorlager, oder Kaffeemaschinenteile.

Des Weiteren betrifft die vorliegende Erfindung eine Verwendung einer Polyamidformmasse, wie sie oben beschrieben wurde, zur Herstellung eines Formkörpers, insbesondere eines Bauteils zur Verwendung in folgenden Bereichen:
Entsprechend betrifft die vorliegende Erfindung des Weiteren ein Formteil aus einer Polyamidformmasse, wie sie oben beschrieben wurde, vorzugsweise zur Verwendung in einem der folgenden Bereiche:
   Elektrogeräte, Sportartikel, optische Geräte, Sanitär- und Hygieneartikel, Haushaltsgeräte, Kommunikationstechnologie, Automobiltechnologie, Energie- und Antriebstechnik, Maschinenbau, Medizinausrüstung, dabei insbesondere bevorzugt in all diesen Fällen in Form von Gehäusen oder Gehäuseteilen, Funktionselementen, Vorrichtungen zum Transport oder zur Lagerung von Medien insbesondere in Form von Hohlkörpern, tragende Elemente, Rahmenelemente, Profile, sowie Kombinationen davon.

Ebenfalls betrifft die vorliegende Erfindung Verfahren zur Herstellung solcher Formteile, vorzugsweise dadurch gekennzeichnet, dass das Formteil in einem Spritzgussverfahren, Blasformverfahren oder Extrusionsverfahren hergestellt wird.

Auch betrifft die vorliegende Erfindung Verwendungen von solchen Formteilen in einem der folgenden Bereiche:
Elektrogeräte, Sportartikel, optische Geräte, Sanitär- und Hygieneartikel, Haushaltsgeräte, Kommunikationstechnologie, Automobiltechnologie, Energie- und Antriebstechnik, Maschinenbau, Medizinausrüstung, dabei insbesondere bevorzugt in all diesen Fällen in Form von Gehäusen oder Gehäuseteilen, Funktionselementen, Vorrichtungen zum Transport oder zur Lagerung von Medien insbesondere in Form von Hohlkörpern, tragende Elemente, Rahmenelemente, Profile, sowie Kombinationen davon, insbesondere als Teil oder ganzes Gehäuse von einem elektronischen, insbesondere bevorzugt tragbaren Gerätes. Damit betrifft die vorliegende Erfindung eine Verwendung einer Polyamidformmasse, wie sie oben beschrieben wurde, zur Herstellung eines Formkörpers, insbesondere eines Bauteils zur Verwendung in folgenden Bereichen:

### Bereich Elektrogeräte

- Anschlag- und/oder Justierelemente für Elektrohandwerkzeuge mit oder ohne integrierten elektrischen Funktionen (moulded interconnect devices, MID)
- Pleuel und/oder Kolben für Bohrhammer in homogener Ausführung, also aus einem Material oder als Hybridteil, also aus einer Materialkombination
- Gehäuse, Getriebegehäuse für Winkelschleifer, Bohrmaschinen, Elektrohobel oder Schleifmaschinen mit oder ohne integrierten elektrischen Funktionen (MID) in homogener Ausführung oder als Hybridteil, wobei bestimmte Funktionsbereiche (z.B. Kraftübertragungsflächen, Gleitflächen, Dekor-Sichtbereiche, Griffbereich) aus einem anderem kompatiblen oder inkompatiblen (z.B. für gezielte Delamination bzw. Deformation, Sollbruchstelle, Kraft- bzw. Drehmomentbegrenzung) Werkstoff sein können.
- Werkzeugaufnahmen, z.B. Futter und/oder Fixierungen
- Nähmaschinengehäuse, Schiebetische mit oder ohne integrierten elektrischen Funktionen (MID)

### Bereich Sanitär- und Hygiene

- Gehäuse und/oder Funktionselemente (z.B. für Pumpen, Getriebe, Ventile) für Mundduschen, Zahnbürsten, Komforttoiletten, Duschzellen, Hygienecenter mit oder ohne integrierten elektrischen Funktionen (MID) in homogener Ausführung oder als Hybridteil
- Pumpengehäuse, Ventilgehäuse oder Wasserzählergehäuse mit oder ohne integrierten elektrischen Funktionen (MID) in homogener Ausführung oder als Hybridteil.
- Bereich Haushaltsgeräte
- Gehäuse und/oder Funktionselemente für mechanische, elektrische oder elektromechanische Schließsysteme, Verriegelungssysteme oder Sensoren mit oder ohne integrierten elektrischen Funktionen (MID) für
- Kühlschränke, Kühltruhen, Gefriertruhen
- Backöfen, Herde, Dampfgarer
- Geschirrspülmaschinen

### Bereich Automobil

- Gehäuse und/oder Halterungen mit oder ohne integrierten elektrischen Funktionen (MID) in homogener Ausführung oder als Hybridteil für
- Bedienungselemente/Schalter (z.B. für Außenspiegelverstellung, Sitzpositionsverstellung, Beleuchtung, Fahrtrichtungsanzeiger)
- Innensensoren, z.B. für Sitzbelegung
- Außensensoren (z.B. für Einparkhilfen, Abstandsmesser mit Ultraschall bzw. mit Radar)
- Sensoren im Motorraum (z.B. Schwingungs- bzw. Klopfsensoren)
- Innen- und Außenbeleuchtung.
- Motoren und/oder Antriebselemente im Innen und Außenbereich (z.B. für Sitzkomfortfunktionen, Außenrückspiegelverstellung, Hauptscheinwerferverstellung und/oder Nachführung, Kurvenlicht)
- Kontroll- und/oder Steuerungssysteme für den Fahrzeugantrieb (z.B. für Medienführung und/oder Regelung von z.B. Treibstoff, Luft, Kühlmittel, Schmiermittel)
- Mechanische Funktionselemente und/oder Sensorengehäuse mit oder ohne integrierten elektrischen Funktionen (MID) für
- Schließsysteme, Verriegelungen, Zuziehsysteme, z.B. bei Fahrzeugschwenktüren, Schiebetüren, Motorraumklappen bzw. -hauben, Heckklappen, Fahrzeugfenstern
- Mechanische, pneumatische oder hydraulische Funktionselemente zur Gangwahl in handgeschalteten und Automatikgetrieben und solche Elemente von Bremssystemen.

### Maschinenbau

- ISO-Normteile und/oder Maschinenelemente (z.B. Schrauben, Muttern, Bolzen, Keile, Wellen, Zahnräder) in Normmassen oder anwendungsspezifischem Design oder homogener Ausführung
- ISO-Normteile und/oder Maschinenelemente, wie z.B. Schrauben, Muttern, Bolzen, Keile, Wellen in Normmassen oder anwendungsspezifischem Design oder als Hybridteil, wobei bestimmte Funktionsbereiche, wie z.B. Kraftübertragungsflächen, Gleitflächen, Dekor-Sichtbereiche aus einem anderem kompatiblen oder inkompatiblen (z.B. für gezielte Delamination, Sollbruchstelle, Kraft/Drehmomentbegrenzung) Werkstoff sein können.
- Ständer, Standfüße, Sockel für Bearbeitungsmaschinen, wie z.B. Standbohrmaschinen, Tischbohrmaschinen, Fräsmaschinen oder Kombimaschinen für Metall- und/oder Holzbearbeitung
- Insertteile, z.B. Gewindebüchsen
- Selbstfurchende Schrauben

### Bereich Energie- und Antriebstechnik:

- Rahmen, Gehäuse, Trägerteile (Substrat) und/oder Befestigungselemente für Solarzellen mit oder ohne integrierten elektrischen Funktionen (MID) in homogener Ausführung oder als Hybridteil.
- Nachführ- und/oder Justierelemente (z.B. für Lager, Scharniere, Gelenke, Zugstangen, Stossstangen) für Kollektoren.
- Pumpengehäuse und/oder Ventilgehäuse mit oder ohne integrierten elektrischen Funktionen (MID) in homogener Ausführung oder als Hybridteil.
- Bereich Medizinalequipment
- Rahmen, Gehäuse, Trägerteile mit oder ohne integrierten elektrischen Funktionen (MID) in homogener Ausführung oder als Hybridteil für Überwachungsgeräte und/oder Equipment zur Unterstützung der Lebensfunktionen.
- Einwegbestecke, wie z.B. Scheren, Klemmen, Zangen, Messergriffe in homogener Ausführung oder als Hybridteil
- Konstruktionen zur kurzzeitigen bzw. notfallmäßigen Fixierung von Frakturen in homogener Ausführung oder als Hybridteil
- Gehhilfen mit oder ohne integrierten elektrischen Funktionen (MID) und/oder Sensoren zur Belastungskontrolle in homogener Ausführung oder als Hybridteil.

Weitere Ausführungsformen sind in den abhängigen Ansprüchen angegeben.

### BESCHREIBUNG BEVORZUGTER AUSFÜHRUNGSFORMEN

Bevorzugte Ausführungsformen der Erfindung werden im Folgenden anhand der Ausführungsbeispiele beschrieben, die lediglich zur Erläuterung dienen und nicht einschränkend auszulegen sind.

In den Beispielen gemäss Tabelle 1 wurden nachfolgend genannte Materialien verwendet:

| | |
|---|---|
| PA Typ A: | Polyamid PA 6T/6I (Verhältnis 6T zu 6I Einheiten von 70:30, ηᵣₑₗ = 1,58, Aminoendgruppen: 60 mmol/kg, Carboxylendgruppen: 160 mmol/kg) |
| GMA-Copolymer 1 | Lotader AX8840, Copolymer aus 92% Ethen und 8% Glycidylmethacrylat, MFR = 5 g/10 min. (ISO 1133, 190°C/2.16 kg), Arkema |
| GMA-Copolymer 2 | Lotader AX8900, Copolymer aus 67% Ethen, 25% Methylacrylat und 8% Glycidylmethacrylat, MFR = 6 g/10 min. (ISO 1133, 190°C/2.16 kg), Arkema |
| GMA-Copolymer 3 | Elvaloy PTW, Copolymer aus 67% Ethen, 28% Butylacrylat und 5% Glycidylmethacrylat, MFR = 12 g/10 min. (ISO 1133, 190°C/2.16 kg), DuPont |
| GMA-Copolymer 4 | Igetabond E, Copolymer aus 88% Ethen und 12% Glycidylmethacrylat, MFR = 3 g/10 min. (ISO 1133, 190°C/2.16 kg), Sumitomo |
| SZM-1 | Tafmer MH7010, Copolymer aus Ethen und Buten gepfropft mit Maleinsäureanhydrid, Mitsui |
| SZM-2 | Fusabond N MN493D, Copolymer aus Ethen und Octen gepfropft mit Maleinsäureanhydrid, DuPont |
| SZM-3 | Kraton EG1901GT, Blockcopolymer aus Ethen, Buten und Styrol gepfropft mit Maleinsäureanhydrid, KRATON Polymers Group |
| SZM-4 | Paraloid BTA753, Copolymer aus Butadien, Methylmethacrylat und Styrol, Rohm&Haas |
| SZM-5 | Lotader 4700, Copolymer aus Ethen und Ethylacrylat gepfropft mit Maleinsäureanhydrid, Arkema |
| SZM-6 | Lotryl 29MA03, Copolymer aus Ethen und Methylacrylat, Arkema |
| SZM-7 | Lucofin 1494 H, Copolymer aus Ethen und Butylacrylat gepfropft mit Maleinsäureanhydrid, Lucobit Thermoplastic Polyolefins |
| Glasfaser Typ A | Schnittglasfasern Vetrotex 995 aus E-Glas, mit einer Länge von 4.5 mm und einem Durchmesser von 10 µm (kreisförmiger Querschnitt) von Owens Corning Fiberglas |
| Additive | Mischung aus Kaolin, Kaliumiodid (0.18% bezogen auf |
| | Formmasse), Kupferiodid (0.06% bezogen auf Formmasse) |

Die Formmassen der Zusammensetzungen in Tabelle 1, 2 und 3 wurden auf einem Zweiwellenextruder der Fa. Werner u. Pfleiderer Typ ZSK 25 hergestellt. Die Komponenten A und C bis E wurden in die Einzugszone dosiert. Die Glasfasern (B) wurden über einen Sidefeeder 3 Gehäuseeinheiten vor der Düse in die Polymerschmelze dosiert.

Die Gehäusetemperatur wurde als aufsteigendes Profil bis 350°C eingestellt. Bei 150 bis 200 upm wurden 10 kg Durchsatz erreicht. Die Compounds wurden als Strang aus einer Düse mit 3 mm Durchmesser abgezogen und nach Wasserkühlung granuliert. Nach Granulierung und Trocknung bei 110°C für 24h wurden die Granulateigenschaften gemessen und die Prüfkörper hergestellt.

Die Prüfkörper wurden auf einer Arburg Allrounder Spritzgussmaschine hergestellt, wobei die Zylindertemperaturen von 250°C bis 350°C und eine Schneckenumfangsgeschwindigkeit von 15 m/min eingestellt wurden. Die Formtemperatur wurde mit 80 - 130°C gewählt.

Die Messungen wurden nach folgenden Normen und an folgenden Prüfkörpern durchgeführt.

Der **Zug-E-Modul** wurde nach ISO 527 mit einer Zuggeschwindigkeit von 1 mm/min, die Streckspannung, die **Reissfestigkeit,** die **Reissdehnung** und die **Bruchenergie** wurden bestimmt gemäss ISO 527 mit einer Zuggeschwindigkeit von 50 mm/min (unverstärkte Varianten) oder einer Zuggeschwindigkeit von 5 mm/min (verstärkte Varianten) bei einer Temperatur von 23 °C, wobei als Probekörper ein ISO-Zugstab, Norm: ISO/CD 3167, Typ Al, 170 x 20/10 x 4 mm, verwendet wurde. Zur Bestimmung des Zug-E-Moduls, der Reissfestigkeit, der Reissdehnung und der Bruchenergie quer zur Verarbeitungsrichtung wurde der oben beschriebene Zugversuch mit speziellen BIAX-Probekörper (publiziert in Noss'Ovra Personalzeitschrift, Dezember 2006, Nr. 12, 29. Jahrgang, EMS-CHEMIE AG) durchgeführt.

**Schlagzähigkeit und Kerbschlagzähigkeit** nach Charpy wurden nach ISO 179 am ISO-Prüfstab, Norm: ISO/CD 3167, Typ B1, 80 x 10 x 4 mm bei Temperatur 23 °C gemessen. Das thermische Verhalten **(Schmelztemperatur** (Tₘ), **Schmelzenthalpie** (ΔHm), **Glasumwandlungstemperatur** (Tg)) wurde anhand der ISO-Norm 11357-11-2 am Granulat bestimmt. Die Differential Scanning Calorimetry (DSC) wurde mit Aufheizrate von 20 °C/min durchgeführt.

Die **relative Viskosität** (ηᵣₑₗ) wurde gemäss DIN EN ISO 307 anhand von 0,5 Gew.-%-igen m-Kresollösungen bei 20 °C gemessen. Als Probe wird Granulat verwendet.

Der **MVR** (Melt volume-flow rate) wird nach ISO 1133 bei 340°C und einer Belastung von 10 kg am Granulat bestimmt.

Die **Wärmeformbeständigkeit** in Form von HDT A (1,8 MPa) und HDT C (8 MPa) wurden gemäss ISO 75 an ISO-Schlagstäben der Dimension 80x10x4 mm bestimmt.

**Tabelle 1: Zusammensetzung und Eigenschaften der Beispiele B1 bis B6**

| **Komponenten** | **Einheit** | **B1** | **B2** | **B3** | **B4** | **B5** | **B6** |
|---|---|---|---|---|---|---|---|
| PA Typ A | Gew.-% | 53.6 | 56.6 | 53.6 | 53.6 | 53.6 | 53.6 |
| GMA-Polymer 1 | Gew.-% | 6 | 3 | 3 | | | |
| GMA-Polymer 2 | Gew.-% | | | | 6 | | |
| GMA-Polymer 3 | Gew.-% | | | | | 6 | |
| GMA-Polymer 4 | Gew.-% | | | | | | 6 |
| SZM-6 | Gew.-% | | | 3 | | | |
| Glasfasern Typ A | Gew.-% | 40 | 40 | 40 | 40 | 40 | 40 |
| Additive | Gew.-% | 0.4 | 0.4 | 0.4 | 0.4 | 0.4 | 0.4 |
| MVR 340/10 | cm³/10min | 23 | 48 | 43 | 18 | 56 | 15 |
| Zug-E-Modul ISO | MPa | 12000 | 12900 | 12400 | 12100 | 11900 | 12400 |
| Reissfestigkeit ISO | MPa | 206 | 210 | 211 | 190 | 183 | 214 |
| Reissdehnung ISO | % | 2.8 | 2.5 | 2.7 | 2.5 | 2.3 | 2.9 |
| Bruchenergie ISO | J | 10.5 | 9.7 | 11 | 8.5 | 7.7 | 10.9 |
| Zug-E-Modul quer | MPa | 7400 | 8300 | 7300 | 6500 | 6800 | 7500 |
| Reissfestigkeit quer | MPa | 97 | 81 | 101 | 83 | 84 | 102 |
| Reissdehnung quer | % | 1.7 | 1.2 | 1.8 | 1.5 | 1.5 | 1.9 |
| Bruchenergie quer | J | 0.4 | 0.2 | 0.5 | 0.3 | 0.3 | 0.5 |
| Schlagzähigkeit 23°C | kJ/m² | 90 | 78 | 91 | 78 | 68 | 92 |
| Kerbschlagzähigkeit 23°C | kJ/m² | 14 | 12 | 13 | 12 | 10 | 15 |
| HDT A (1.8 MPa) | °C | 260 | 265 | 257 | 254 | 250 | 260 |
| HDT C (8 MPa) | °C | 146 | 142 | 144 | 143 | 142 | 145 |

**Tabelle 2: Zusammensetzung und Eigenschaften der Beispiele B7 bis B9 und Vergleichsbeispiele V1 bis V3**

| **Komponenten** | **Einheit** | **B7** | **B8** | **B9** | **V1** | **V2** | **V3** |
|---|---|---|---|---|---|---|---|
| PA Typ A | Gew.-% | 62.6 | 59.6 | 76.1 | 59.6 | 53.6 | 53.6 |
| GMA-Polymer 1 | Gew.-% | 7 | 10 | 8.5 | | | |
| SZM-4 | Gew.-% | | | | | | 6 |
| SZM-5 | Gew.-% | | | | | 6 | |
| Glasfasern Typ A | Gew.-% | 30 | 30 | 15 | 40 | 40 | 40 |
| Additive | Gew.-% | 0.4 | 0.4 | 0.4 | 0.4 | 0.4 | 0.4 |
| MVR 340/10 | cm³/10min | 22 | 6 | 23 | 62 | 50 | 82 |
| Zug-E-Modul ISO | MPa | 9300 | 8600 | 5500 | 13800 | 12300 | 12900 |
| Reissfestigkeit ISO | MPa | 177 | 148 | 125 | 237 | 147 | 215 |
| Reissdehnung ISO | % | 3.1 | 2.7 | 3.9 | 2.3 | 1.5 | 2.3 |
| Bruchenergie ISO | J | 10.2 | 7.4 | 10.5 | 9.6 | 3.6 | 8.8 |
| Zug-E-Modul quer | MPa | 5600 | 5900 | 5000 | 9400 | 6800 | 9000 |
| Reissfestigkeit quer | MPa | 106 | 103 | 116 | 74 | 62 | 58 |
| Reissdehnung quer | % | 2.6 | 2.9 | 4.4 | 0.8 | 1.0 | 0.6 |
| Bruchenergie quer | J | 0.7 | 0.8 | 1.5 | 0.1 | 0.2 | 0.1 |
| Schlagzähigkeit 23°C | kJ/m² | 78 | 83 | 73 | 69 | 46 | 64 |
| Kerbschlagzähigkeit 23°C | kJ/m² | 13 | 14 | 11 | 10 | 9 | 9 |
| HDT A (1.8 MPa) | °C | - | - | - | 280 | 263 | 276 |
| HDT C (8 MPa) | °C | - | - | - | 145 | 145 | 145 |

**Tabelle 3: Zusammensetzung und Eigenschaften der Vergleichsversuche V4 bis V9**

| **Komponenten** | **Einheit** | **V4** | **V5** | **V6** | **V7** | **V8** | **V9** |
|---|---|---|---|---|---|---|---|
| PA Typ A | Gew.-% | 53.6 | 53.6 | 53.6 | 53.6 | 69.6 | 84.6 |
| SZM-1 | Gew.-% | | | 6 | | | |
| SZM-2 | Gew.-% | | 6 | | | | |
| SZM-3 | Gew.-% | 6 | | | | | |
| SZM-7 | Gew.-% | | | | 6 | | |
| Glasfasern Typ A | Gew.-% | 40 | 40 | 40 | 40 | 30 | 15 |
| Additive | Gew.-% | 0.4 | 0.4 | 0.4 | 0.4 | 0.4 | 0.4 |
| MVR 340/10 | cm³/10min | 55 | 52 | 53 | 68 | 74 | 68 |
| Zug-E-Modul ISO | MPa | 11800 | 12000 | 11700 | 12500 | 10700 | 6700 |
| Reissfestigkeit ISO | MPa | 145 | 127 | 113 | 148 | 198 | 123 |
| Reissdehnung ISO | % | 1.9 | 1.6 | 1.5 | 1.6 | 2.3 | 2.0 |
| Bruchenergie ISO | J | 5.3 | 3.7 | 3.2 | 4.0 | 7.4 | 3.7 |
| Zug-E-Modul quer | MPa | 5900 | 5800 | 4900 | 7100 | 7700 | 6300 |
| Reissfestigkeit quer | MPa | 70 | 66 | 59 | 74 | 74 | 76 |
| Reissdehnung quer | % | 1.4 | 1.4 | 1.4 | 1.4 | 1.0 | 1.3 |
| Bruchenergie quer | J | 0.3 | 0.2 | 0.3 | 0.2 | 0.2 | 0.2 |
| Schlagzähigkeit 23°C | kJ/m² | 45 | 40 | 33 | 39 | 53 | 28 |
| Kerbschlagzähigkeit 23°C | kJ/m² | 9 | 9 | 8 | 8 | 9 | 5.4 |
| HDT A (1.8 MPa) | °C | 245 | 253 | 237 | 256 | - | - |
| HDT C (8 MPa) | °C | 138 | 143 | 139 | 140 | - | - |

Die Wärmeformbeständigkeit (HDT A und HDT C) der mit 40 Gew.-% Glasfasern verstärkten erfindungsgemässen Formmassen wird gegenüber der nichtschlagzähmodifizierten Formmasse (V1) um 15 bis 35°C reduziert, liegt aber auf dem Niveau der mit üblichen SZM versehenen Formmassen (V2 - V7). Hiervon hebt sich lediglich V3 ab, hier ist der Schlagzähmodifier ein Kern-Schale-System mit einem HDT A von 278°C. Mit einem HDT A im Bereich von 250-265°C und einem HDT C im Bereich von 135-146°C wird ein hohes Niveau gehalten.

Die Reissfestigkeit sinkt gegenüber der unmodifizierten Formmasse V1 ebenfalls ab, bleibt aber mit Werten von 183 - 210 MPa im Vergleich zu üblichen SZM mit Werten von 113-148 MPa auf einem höheren Niveau. Wiederum bildet die Formmasse mit SZM-4 eine Ausnahme, hier wird eine Reissfestigkeit von 215 MPa erreicht.

Die erfindungsgemäss modifizierten Formmassen erreichen hohe Reissdehnungen von 2.3 - 2.9%, während mit üblichen SZM modifizierte Formmassen nur auf Dehnungen im Bereich von 1.5 - 1.9% kommen. Die Formmasse V3, modifiziert mit dem Kern-Schale SZM-4 erreicht eine Reissdehnung von 2.3%, welche identisch zur unmodifizierten Formmasse ist.

Auch die Bruchenergie parallel zur Verarbeitungsrichtung liegt bei den erfindungsgemässen Beispielen über derjenigen der Formmassen des Standes der Technik. Ausnahme ist wiederum die Formmasse 3, die unter Einsatz von SZM-4 hergestellt wurde. Eine Verbesserung der Bruchenergie gegenüber der unmodifizierten Variante V1 lässt sich nur durch Verwendung der erfindungsgemässen Komponente B erzielen.

Die Reissfestigkeit, Reissdehnung und Bruchenergie quer zur Verarbeitungsrichtung ist bei den erfindungsgemässen Formmassen stets auf hohem Niveau. Bei diesen sogenannten Quereigenschaften (gemessen quer zur Verarbeitungsrichtung) unterliegt ganz klar auch die Modifizierung mit dem Kern-Schale SZM-4. Auch bezüglich der Schlagzähigkeit und Kerbschlagzähigkeit sind die erfindungsgemässen Formmassen den Vergleichsbeispielen deutlich überlegen. Auch hier versagt das Kern-Schale-System SZM-4.

Somit erfüllen allein die erfindungsgemässen Formmassen die Forderung nach einer gleichzeitigen
- guten Wärmeformbeständigkeit (HDT A ist wenigstens 245°C, bevorzugt wenigstens 250°C und HDT C ist wenigstens 130°C, bevorzugt wenigstens 140°C)
- hohen Reissfestigkeit (RF_{längs}) und Reissdehnung (RD_{längs}) längs zur Verarbeitungsrichtung (RF_{längs} (40% GF) ≥ 160 MPa, bevorzugt ≥ 180 MPa; RD_{längs} ≥ 2.3%, bevorzugt ≥ 2.5%)
- hohen Bruchenergie längs (BE_{längs}) zur Verarbeitungsrichtung (BE_{längs} ≥ 7, bevorzugt ≥ 9)
- hohen Reissfestigkeit (RF_{quer})und Reissdehnung (RD_{quer}) quer zur Verarbeitungsrichtung (RF_{quer} (40% GF) ≥ 75 MPa, bevorzugt ≥ 80 MPa; RD_{quer} ≥ 1.0%, bevorzugt ≥ 1.5%)
- hohen Bruchenergie (BE_{quer}) quer zur Verarbeitungsrichtung (BE_{quer} ≥ 0.2, bevorzugt ≥ 0.3)
- und hohen Schlagzähigkeit (SZ) und Kerbschlagzähigkeit (KSZ) bei Raumtemperatur (SZ ≥ 65 kJ/m², bevorzugt ≥ 70 kJ/m²; KSZ ≥ 9 kJ/m², bevorzugt ≥ 11 kJ/m²).

## Patentansprüche

1. Polyamidformmasse bestehend aus den folgenden Komponenten:
(M) 32 - 84.9 Gew.-% einer Mischung bestehend aus (A) und (B) in folgenden Anteilen:
(A) 85 - 99 Gew.-% teilkristallines, teilaromatisches Polyamid mit einem Schmelzpunkt von mehr als 270°C oder eine Mischung solcher Polyamide;
(B) 3 - 15 Gew.-% Copolymer aus Glycidylacrylat und/oder Glycidylmethacrylat mit mindestens einem weiteren Monomeren mit wenigstens einer olefinischen Kohlenstoff-Kohlenstoff-Doppelbindung oder eine Mischung solcher Copolymere;
wobei die Summe von A und B 100% der Komponente (M) ergibt;
(C) 15 - 65 Gew.-% faserförmige Verstärkungsmittel;
(D) 0.1 - 3.0 Gew.-% Wärmestabilisatoren;
(E) 0 - 25 Gew.-% Hilfsstoffe und/oder Additive, verschieden von den Komponenten (C) und (D), und/oder Polymere verschieden von (A) und (B), wobei die Summe aus (M), (C), (D) 100 Gew.-% ausmacht respektive die Summe aus (M), (C), (D) und (E) 100 Gew.-% ausmacht,
mit der Maßgabe, dass die Polyamidformmasse frei ist von gepfropften Schlagzähmodifikatoren.

2. Polyamidformmasse Anspruche 1, **dadurch gekennzeichnet, dass** der Anteil von (M) in der Polyamidformmasse im Bereich von 35 - 79.8 Gew.-%, vorzugsweise im Bereich von 40 - 74.75 Gew.-% oder 45 - 69.8 Gew.-% liegt,
und/oder dass, jeweils bezogen auf die Summe von (A) und (B) als 100% der Komponente (M), die Komponente (A) im Bereich von 88 - 98 Gew.-%, bevorzugt im Bereich von 89 - 97 Gew.-% vorliegt, insbesondere bevorzugt im Bereich von 90-97 Gew.-%.

3. Polyamidformmasse nach einem der vorhergehenden Ansprüche, **dadurch gekennzeichnet, dass**, bezogen auf die Summe von (A) und (B) als 100% der Komponente (M), die Komponente (B) im Bereich von 2 - 12 Gew.-% vorliegt, bevorzugt im Bereich von 3 - 11 Gew.-%, insbesondere bevorzugt im Bereich von 3-10 Gew.-%.

4. Polyamidformmasse nach einem der vorhergehenden Ansprüche, **dadurch gekennzeichnet, dass** die Komponente (A) ein teilaromatisches Polyamid auf Basis von Terephthalsäure mit einem Gehalt von Terephthalsäure von mindestens 52 mol-%, vorzugsweise von mindestens 54 mol-% und insbesondere vorzugsweise von mindestens 57 mol-% ist, vorzugsweise in Kombination mit Isophthalsäure als weitere Disäure in einem Anteil von wenigstens 18 mol-%, vorzugsweise von wenigstens 26 mol-%, jeweils bezogen auf die Summe der eingesetzten Dicarbonsäuren, und auf Basis eines oder mehrerer verschiedener linearer aliphatischer Diamine mit einer Kettenlänge im Bereich von 4-18, vorzugsweise im Bereich von 6-12 Kohlenstoffatomen, insbesondere vorzugsweise ausgewählt als 1,6-Hexamethylendiamin und/oder 1,10-Dekandiamin, wobei insbesondere vorzugsweise die Komponente (A) ausgewählt ist als 6T/6I, mit einem Gehalt an Terephthalsäure von 62 bis 82 mol-% bezogen auf die Summe der eingesetzten Dicarbonsäuren, ist.

5. Polyamidformmasse nach einem der vorhergehenden Ansprüche, **dadurch gekennzeichnet, dass** die Komponente (B) ein Copolymer aus Glycidylacrylat und/oder Glycidylmethacrylat und mindestens einem weiteren ungesättigten Monomeren mit wenigstens einer Kohlenstoff-Kohlenstoff-Doppelbindung ist, wobei die Konzentration von Glycidylacrylat, Glycidylmethacrylat oder der Mischung davon im Bereich von 5 bis 15 Gew.-%, bevorzugt im Bereich von 7 bis 14 Gew.-%, bezogen auf die Summe aller Monomere im Copolymer, liegt.

6. Polyamidformmasse nach Anspruch 5, **dadurch gekennzeichnet, dass** das weitere ungesättigte Monomer ein einfach ungesättigtes Olefin, bevorzugt ein α-Olefin, mit 2 bis 8 Kohlenstoffatomen und/oder ein (Meth)acrylsäureester mit 4 bis 12 Kohlenstoffatomen und/oder Vinylacetat ist.

7. Polyamidformmasse nach Anspruch 5 oder 6, **dadurch gekennzeichnet, dass** das Copolymer (B) neben Glycidylacrylat und/oder Glycidylmethacrylat mindestens ein weiteres ungesättigtes Monomer enthält ausgewählt aus der Gruppe bestehend aus: Ethen, Propen, 1-Buten, 2-Buten, 1-Penten, 2-Penten, Methy(meth)lacrylat, Ethyl(meth)acrylat, Propyl(meth)acrylat, Isopropyl(meth)acrylat, Butyl(meth)acrylat, Vinylacetat, oder Kombinationen davon.

8. Polyamidformmasse nach einem der vorhergehenden Ansprüche, **dadurch gekennzeichnet, dass** die Komponente (B) ein Copolymer aus Glycidylmethacrylat und Ethen sowie gegebenenfalls weiteren olefinisch ungesättigten Monomeren ist, wobei der Gehalt an Ethen im Bereich von 50 bis 95 Gew.-%, bevorzugt im Bereich von 65 bis 93 Gew.-% liegt, wobei vorzugsweise die Schmelze-Massefliessrate (MFR) bestimmt nach ISO 1133 bei 190°C und einer Auflage von 2.16 kg im Bereich von 2 bis 20 g/10 min, bevorzugtermassen im Bereich von 3 bis 15 g/10 min liegt.

9. Polyamidformmasse nach einem der vorhergehenden Ansprüche, **dadurch gekennzeichnet, dass** Komponente (C) in der Formmasse in einem Anteil im Bereich von 20-60 Gew.-%, insbesondere vorzugsweise im Bereich von 25-55 Gew.-% vorliegt oder im Bereich von 30 - 45 Gew.-% vorliegt.

10. Polyamidformmasse nach einem der vorhergehenden Ansprüche, **dadurch gekennzeichnet, dass** es sich bei der Komponente (C) um Glasfasern, Kohlefasern, oder eine Mischung solcher Fasern handelt, wobei es sich vorzugsweise um Glasfasern handelt, insbesondere bevorzugt um Glasfasern mit kreisförmiger Querschnittsfläche, Glasfasern mit nicht-kreisförmiger Querschnittsfläche, oder eine Mischung solcher Glasfasern, wobei insbesondere bevorzugt Glasfasern mit kreisförmiger Querschnittsfläche einen Durchmesser im Bereich von 3-12 µm, vorzugsweise im Bereich von 5-13 µm und insbesondere bevorzugt im Bereich von 5-12 µm aufweisen, und Glasfasern mit nicht-kreisförmiger Querschnittsfläche vorzugsweise ein Abmessungsverhältnis von der Hauptquerschnittsachse zur senkrecht darauf stehenden Nebenquerschnittsachse von mehr als 2.5, vorzugsweise im Bereich von 2.5 - 6 oder 3 - 5 aufweisen, wobei die Hauptquerschnittsachse bevorzugtermassen eine Länge im Bereich von 5 - 35 µm, bevorzugt im Bereich von 12 - 30 µm und die Nebenquerschnittsachse bevorzugtermassen eine Länge im Bereich von 3-17 µm, vorzugsweise im Bereich von 4-10 µm aufweist.

11. Polyamidformmasse nach einem der vorhergehenden Ansprüche, **dadurch gekennzeichnet, dass** es sich bei der Komponente (D), welche vorzugsweise in der Formmasse in einem Anteil im Bereich von 0.15-2 Gew.-%, bevorzugt im Bereich von 0.17-1.5 Gew.-% vorliegt, ausgewählt ist aus der folgenden Gruppe: Verbindungen des ein- oder zweiwertigen Kupfers, Stabilisatoren auf Basis sekundärer aromatischer Amine, Stabilisatoren auf Basis sterisch gehinderter Phenole, Phosphite, Phosphonite, sowie Mischungen davon.

12. Polyamidformmasse nach einem der vorhergehenden Ansprüche, **dadurch gekennzeichnet, dass** es sich bei der Komponente (E), welche vorzugsweise in der Formmasse im Bereich von 0-15 Gew.-%, insbesondere vorzugsweise im Bereich von 2-10 Gew.-% enthalten ist, um Füllstoffe, gegebenenfalls in oberflächenbehandelter Form, ausgewählt aus der folgenden Gruppe handelt: Talk, Glimmer, Silikat, Quarz, Titandioxid, Wollastonit, Kaolin, amorphe Kieselsäuren, Magnesiumcarbonat, Magnesiumhydroxid, Kreide, Kalk, Feldspat, Bariumsulfat, Voll- oder Hohl-Glaskugeln oder gemahlenes Glas, insbesondere gemahlene, flache Glasfasern, dauerhaft magnetische bzw. magnetisierbare Metallverbindungen und/oder Legierungen, Flammschutzmittel, insbesondere halogen-freie Flammschutzmittel, aliphatische Polyamide, insbesondere Polyamid 6 und/oder amorphe, teilaromatische Polyamide, insbesondere PA 6I/6T, Lichtschutzmittel, UV-Stabilisatoren, UV-Absorber oder UV-Blocker, Gleitmittel, Farbstoffe, Nukleierungsmittel, metallische Pigmente, Antistatika, Leitfähigkeitsadditive, Entformungsmittel, optische Aufheller, sowie Mischungen davon.

13. Formteil aus einer Polyamidformmasse nach einem der vorhergehenden Ansprüche, vorzugsweise zur Verwendung in einem der folgenden Bereiche:
Elektrogeräte, Sportartikel, optische Geräte, Sanitär- und Hygieneartikel, Haushaltsgeräte, Kommunikationstechnologie, Automobiltechnologie, Energie- und Antriebstechnik, Maschinenbau, Medizinausrüstung, dabei insbesondere bevorzugt in all diesen Fällen in Form von Gehäusen oder Gehäuseteilen, Funktionselementen, Vorrichtungen zum Transport oder zur Lagerung von Medien insbesondere in Form von Hohlkörpern, tragende Elemente, Rahmenelemente, Profile, sowie Kombinationen davon.

14. Verfahren zur Herstellung eines Formteils nach Anspruch 13, **dadurch gekennzeichnet, dass** es in einem Spritzgussverfahren, Blasformverfahren oder Extrusionsverfahren hergestellt wurde.

15. Verwendung eines Formteils nach Anspruch 13 in einem der folgenden Bereiche: Elektrogeräte, Sportartikel, optische Geräte, Sanitär- und Hygieneartikel, Haushaltsgeräte, Kommunikationstechnologie, Automobiltechnologie, Energie- und Antriebstechnik, Maschinenbau, Medizinausrüstung, dabei insbesondere bevorzugt in all diesen Fällen in Form von Gehäusen oder Gehäuseteilen, Funktionselementen, Vorrichtungen zum Transport oder zur Lagerung von Medien insbesondere in Form von Hohlkörpern, tragende Elemente, Rahmenelemente, Profile, sowie Kombinationen davon, insbesondere als Teil oder ganzes Gehäuse von einem elektronischen, insbesondere bevorzugt tragbaren Gerätes.

## Claims

1. Polyamide moulding composition consisting of the following components:
(M) 32 to 84.9% by weight of a mixture consisting of (A) and (B) in the following proportions:
(A) 85 to 99% by weight of semicrystalline, semiaromatic polyamide with melting point above 270°C, or a mixture of these polyamides;
(B) 3 to 15% by weight of copolymer of glycidyl acrylate and/or glycidyl methacrylate with at least one other monomer having at least one olefinic carbon-carbon double bond, or a mixture of these copolymers;
where the entirety of A and B gives 100% of the component (M);
(C) 15 to 65% by weight of fibrous reinforcing materials;
(D) 0.1 to 3.0% by weight of heat stabilizers;
(E) 0 to 25% by weight of auxiliaries and/or additives different from components (C) and (D), and/or polymers different from (A) and (B),
wherein the entirety of (M), (C) and (D) makes up 100% by weight or, respectively, the entirety of (M), (C), (D) and (E) makes up 100% by weight with the proviso that the polyamide moulding composition is free from grafted impact modifiers.

2. Polyamide moulding composition according to claim 1, **characterized in that** the proportion of (M) in the polyamide moulding composition is in the range of 35 to 79.8% by weight, preferably in the range of 40 to 74.75% by weight or from 45 to 69.8% by weight,
and/or **in that**, in each case based on the entirety (A) and (B) as 100% of the component (M), the proportion of the component (A) present is in the range from 88 to 98% by weight, preferably in the range from 89 to 97% by weight, with particular preference in the range from 90 to 97% by weight.

3. Polyamide moulding composition according to any of the preceding claims, **characterized in that** in each case based on the entirety (A) and (B) as 100% of the component (M), the proportion of the component (B) present is in the range from 2 to 12% by weight, preferably in the range from 3 to 11% by weight, with particular preference in the range from 3 to 10% by weight.

4. Polyamide moulding composition according to any of the preceding claims, **characterized in that** the component (A) is a semiaromatic polyamide based on terephthalic acid with at least 52 mol%, preferably at least 54 mol% and with particular preference at least 57 mol%, content of terephthalic acid, preferably in combination with isophthalic acid as further diacid in a proportion of at least 18 mol%, preferably of at least 26 mol%, based in each case on the entirety of the dicarboxylic acid used and based on one or more linear aliphatic diamines with chain length in the range of 4 to 18 carbon atoms, preferably in the range of 6 to 12 carbon atoms, with particular preference selected from 1,6-hexamethylenediamine and/or 1,10-decanediamine, where with particular preference the component (A) is selected as 6T/6I with from 62 to 82 mol% content of terephthalic acid, based on the entirety of the dicarboxylic acid used.

5. Polyamide moulding composition according to any of the preceding claims, **characterized in that** the component (B) is a copolymer of glycidyl acrylate and/or glycidyl methacrylate and of at least one other unsaturated monomer having at least one carbon-carbon double bond, where the concentration of glycidyl acrylate, glycidyl methacrylate or the mixture thereof is in the range of 5 to 15% by weight, preferably in the range of 7 to 14% by weight, based on the entirety of all the monomers in the copolymer.

6. Polyamide moulding composition according to Claim 6, **characterized in that** the other unsaturated monomer is a monounsaturated olefin, preferably an α-olefin, having from 2 to 8 carbon atoms and/or a (meth)acrylic ester having from 4 to 12 carbon atoms and/or vinyl acetate.

7. Polyamide moulding composition according to Claim 6 or 7, **characterized in that** the copolymer (B) comprises, alongside glycidyl acrylate and/or glycidyl methacrylate, at least one other unsaturated monomer selected from the group consisting of: ethene, propene, 1-butene, 2-butene, 1-pentene, 2-pentene, methyl (meth)acrylate, ethyl (meth)acrylate, propyl (meth)acrylate, isopropyl (meth)acrylate, butyl (meth)acrylate, vinyl acetate and combinations thereof.

8. Polyamide moulding composition according to any of the preceding claims, **characterized in that** the component (B) is a copolymer of glycidyl methacrylate and ethene, and also optionally of other olefinically unsaturated monomers, where the content of ethene is in the range of 50 to 95% by weight, preferably in the range of 65 to 93% by weight, where the melt flow rate (MFR) determined in accordance with ISO 1133 at 190°C with an applied weight of 2.16 kg is in the range of 2 to 20 g/10 min, preferably in the range of 3 to 15 g/10 min.

9. Polyamide moulding composition according to any of the preceding claims, **characterized in that** the proportion of component (C) is in the range of 20 to 60% by weight, with particular preference in the range of 25 to 55% by weight or in the range of 30 to 45% by weight.

10. Polyamide moulding composition according to any of the preceding claims, **characterized in that** the component (C) is glass fibres, carbon fibres, or a mixture of these fibres, preference being given to glass fibres here, in particular to glass fibres with circular cross section, glass fibres with non-circular cross section, or a mixture of these glass fibres, where glass fibres with circular cross section with particular preference have a diameter in the range of 3 to 12 µm, preferably in the range of 5 to 13 µm and with particular preference in the range of 5 to 12 µm, and glass fibres with non-circular cross section preferably have a dimension ratio of the primary cross-sectional axis to the secondary cross-sectional axis perpendicular thereto of more than 2.5, preferably from 2.5 to 6 or from 3 to 5, where the length of the primary cross-sectional axis is preferably in the range of 5 to 35 µm, preferably in the range of 12 to 30 µm, and the length of the secondary cross-sectional axis is preferably in the range of 3 to 17 µm, with preference in the range of 4 to 10 µm.

11. Polyamide moulding composition according to any of the preceding claims, **characterized in that** component (D), the proportion of which present in the moulding composition is preferably in the range of 0.15 to 2% by weight, with preference in the range of 0.17 to 1.5% by weight, is selected from the following group: compounds of the mono- or divalent copper, stabilizers based on secondary aromatic amines, stabilizers based on sterically hindered phenols, phosphites, phosphonites, and mixtures thereof.

12. Polyamide moulding composition according to any of the preceding claims, **characterized in that** component (E), the proportion of which present in the moulding composition is in the range of 0 to 15% by weight, with particular preference in the range of 2 to 10% by weight, is fillers, optionally in surface-treated form, selected from the following group: talc, mica, silicate, quartz, titanium dioxide, wollastonite, kaolin, amorphous silicas, magnesium carbonate, magnesium hydroxide, chalk, lime, feldspar, barium sulphate, solid or hollow glass beads or ground glass, and in particular ground, flat glass fibres, permanently magnetic or magnetizable metal compounds and/or alloys, flame retardants, in particular halogen-free flame retardants, aliphatic polyamides, in particular nylon-6 and/or amorphous, semiaromatic polyamides, in particular PA 6I/6T, light stabilizers, UV stabilizers, UV absorbers or UV blockers, lubricants, dyes, nucleating agents, metallic pigments, antistatic agents, conductivity additives, mould-release agents, optical brighteners, and mixtures thereof.

13. Moulding made of a polyamide moulding composition according to any of the preceding claims, preferably for use in one of the following sectors:
electrical equipment, sports items, optical equipment, sanitary and hygiene items, household equipment, communications technology, automobile technology, energy and drive technology, mechanical engineering, medical equipment, and with particular preference in all of these instances in the form of housings or housing parts, functional elements, devices for the transport, or the storage, of media, in particular in the form of hollow bodies, load-bearing elements, frame elements, profiles, and combinations thereof.

14. Process for the production of a moulding according to Claim 13, **characterized in that** it was produced in an injection-moulding process, blow-moulding process or extrusion process.

15. Use of a moulding according to Claim 13 in any of the following sectors:
electrical equipment, sports items, optical equipment, sanitary and hygiene items, household equipment, communications technology, automobile technology, energy and drive technology, mechanical engineering, medical equipment, and with particular preference in all of these instances in the form of housings or housing parts, functional elements, devices for the transport, or the storage, of media, in particular in the form of hollow bodies, load-bearing elements, frame elements, profiles, and combinations thereof, in particular as part or entire housing of electronic, with particular preference portable equipment.

## Revendications

1. Matériau de moulage polyamide, constitué par les composants suivantes :
(M) 32 à 84,9 % en poids d'un mélange constitué par (A) et (B) en les proportions suivantes :
(A) 85 à 99 % en poids d'un polyamide partiellement aromatique, partiellement cristallin, ayant un point de fusion de plus de 270 °C, ou d'un mélange de tels polyamides ;
(B) 3 à 15 % en poids d'un copolymère d'acrylate de glycidyle et/ou de méthacrylate de glycidyle avec au moins un autre monomère contenant au moins une double liaison carbone-carbone oléfinique ou d'un mélange de tels copolymères ;
la somme de A et B étant de 100 % du composant (M) ;
(C) 15 à 65 % en poids d'agents renforçants fibreux ;
(D) 0,1 à 3,0 % en poids de stabilisateurs thermiques ;
(E) 0 à 25 % en poids d'adjuvants et/ou d'additifs, différents des composants (C) et (D), et/ou de polymères différents de (A) et (B),
la somme de (M), (C), (D) étant de 100 % en poids ou la somme de (M), (C), (D) et (E) étant de 100 % en poids,
à condition que le matériau de moulage polyamide soit exempt de modificateurs de la résistance aux impacts greffés.

2. Matériau de moulage polyamide selon la revendication 1, **caractérisé en ce que** la proportion de (M) dans le matériau de moulage polyamide se situe dans la plage allant de 35 à 79,8 % en poids, de préférence dans la plage allant de 40 à 74,75 % en poids ou de 45 à 69,8 % en poids,
et/ou **en ce que**, à chaque fois par rapport à la somme de (A) et (B) en tant que 100 % du composant (M), le composant (A) est présent dans la plage allant de 88 à 98 % en poids, de préférence dans la plage allant de 89 à 97 % en poids, de manière particulièrement préférée dans la plage allant de 90 à 97 % en poids.

3. Matériau de moulage polyamide selon l'une quelconque des revendications précédentes, **caractérisé en ce que**, par rapport à la somme de (A) et (B) en tant que 100 % du composant (M), le composant (B) est présent dans la plage allant de 2 à 12 % en poids, de préférence dans la plage allant de 3 à 11 % en poids, de manière particulièrement préférée dans la plage allant de 3 à 10 % en poids.

4. Matériau de moulage polyamide selon l'une quelconque des revendications précédentes, **caractérisé en ce que** le composant (A) est un polyamide partiellement aromatique à base d'acide téréphtalique ayant une teneur en acide téréphtalique d'au moins 52 % en moles, de préférence d'au moins 54 % en moles et de manière particulièrement préférée d'au moins 57 % en moles, de préférence en combinaison avec de l'acide isophtalique en tant que diacide supplémentaire en une proportion d'au moins 18 % en moles, de préférence d'au moins 26 % en moles, à chaque fois par rapport à la somme des acides dicarboxyliques utilisés, et à base d'une ou de plusieurs diamines aliphatiques linéaires différentes ayant une longueur de chaîne dans la plage allant de 4 à 18, de préférence dans la plage allant de 6 à 12 atomes de carbone, de manière particulièrement préférée choisies comme la 1,6-hexaméthylène-diamine et/ou la 1,10-décane-diamine, le composant (A) étant de manière particulièrement préférée choisi comme le 6T/6I, ayant une teneur en acide téréphtalique de 62 à 82 % en moles, par rapport à la somme des acides dicarboxyliques utilisés.

5. Matériau de moulage polyamide selon l'une quelconque des revendications précédentes, **caractérisé en ce que** le composant (B) est un copolymère d'acrylate de glycidyle et/ou de méthacrylate de glycidyle et d'au moins un autre monomère insaturé contenant au moins une double liaison carbone-carbone, la concentration d'acrylate de glycidyle, de méthacrylate de glycidyle ou de leur mélange se situant dans la plage allant de 5 à 15 % en poids, de préférence dans la plage allant de 7 à 14 % en poids, par rapport à la somme de tous les monomères dans le copolymère.

6. Matériau de moulage polyamide selon la revendication 5, **caractérisé en ce que** l'autre monomère insaturé est une oléfine monoinsaturée, de préférence une α-oléfine, contenant 2 à 8 atomes de carbone, et/ou un ester de l'acide (méth)acrylique contenant 4 à 12 atomes de carbone et/ou l'acétate de vinyle.

7. Matériau de moulage polyamide selon la revendication 5 ou 6, **caractérisé en ce que** le copolymère (B) contient en plus de l'acrylate de glycidyle et/ou du méthacrylate de glycidyle au moins un autre monomère insaturé choisi dans le groupe constitué par : l'éthène, le propène, le 1-butène, le 2-butène, le 1-pentène, le 2-pentène, le (méth)acrylate de méthyle, le (méth)acrylate d'éthyle, le (méth)acrylate de propyle, le (méth)acrylate d'isopropyle, le (méth)acrylate de butyle, l'acétate de vinyle ou leurs combinaisons.

8. Matériau de moulage polyamide selon l'une quelconque des revendications précédentes, **caractérisé en ce que** le composant (B) est un copolymère de méthacrylate de glycidyle et d'éthène, et éventuellement d'autres monomères oléfiniquement insaturés, la teneur en éthène se situant dans la plage allant de 50 à 95 % en poids, de préférence dans la plage allant de 65 à 93 % en poids, l'indice de fluidité à chaud (MFR) déterminé selon ISO 1133 à 190 °C et une charge de 2,16 kg se situant dans la plage allant de 2 à 20 g/10 min, de préférence dans la plage allant de 3 à 15 g/10 min.

9. Matériau de moulage polyamide selon l'une quelconque des revendications précédentes, **caractérisé en ce que** le composant (C) est présent dans le matériau de moulage en une proportion dans la plage allant de 20 à 60 % en poids, de manière particulièrement préférée dans la plage allant de 25 à 55 % en poids, ou dans la plage allant de 30 à 45 % en poids.

10. Matériau de moulage polyamide selon l'une quelconque des revendications précédentes, **caractérisé en ce que** le composant (C) consiste en des fibres de verre, des fibres de carbone ou un mélange de telles fibres, de préférence en des fibres de verre, de manière particulièrement préférée en des fibres de verre ayant une surface de section transversale circulaire, des fibres de verre ayant une surface de section transversale non circulaire, ou un mélange de telles fibres de verre, de manière particulièrement préférée en des fibres de verre ayant une surface de section transversale circulaire d'un diamètre dans la plage allant de 3 à 12 µm, de préférence dans la plage allant de 5 à 13 µm et de manière particulièrement préférée dans la plage allant de 5 à 12 µm, et en des fibres de verre ayant une surface de section transversale non circulaire, présentant de préférence un rapport entre les dimensions de l'axe principal de la section transversale et de l'axe secondaire de la section transversale perpendiculaire à celui-ci de plus de 2,5, de préférence dans la plage allant de 2,5 à 6 ou de 3 à 5, l'axe principal de la section transversale présentant de préférence une longueur dans la plage allant de 5 à 35 µm, de préférence dans la plage allant de 12 à 30 µm, et l'axe secondaire de la section transversale présentant de préférence une longueur dans la plage allant de 3 à 17 µm, de préférence dans la plage allant de 4 à 10 µm.

11. Matériau de moulage polyamide selon l'une quelconque des revendications précédentes, **caractérisé en ce que** le composant (D), qui est de préférence présent dans le matériau de moulage en une proportion dans la plage allant de 0,15 à 2 % en poids, de préférence dans la plage allant de 0,17 à 1,5 % en poids, est choisi dans le groupe suivant : les composés de cuivre mono- ou bivalents, les stabilisateurs à base d'amines aromatiques secondaires, les stabilisateurs à base de phénols à encombrement stérique, les phosphites, les phosphonites et leurs mélanges.

12. Matériau de moulage polyamide selon l'une quelconque des revendications précédentes, **caractérisé en ce que** le composant (E), qui est de préférence contenu dans le matériau de moulage dans la plage allant de 0 à 15 % en poids, de manière particulièrement préférée dans la plage allant de 2 à 10 % en poids, consiste en des charges, éventuellement sous forme traitée en surface, choisies dans le groupe suivant : le talc, le mica, le silicate, le quartz, le dioxyde de titane, la wollastonite, le kaolin, les silices amorphes, le carbonate de magnésium, l'hydroxyde de magnésium, la craie, la chaux, le feldspath, le sulfate de baryum, les billes de verre pleines ou creuses ou le verre broyé, notamment les fibres de verre plates broyées, les composés métalliques et/ou les alliages magnétisables ou magnétiques de manière durable, les agents ignifuges, notamment les agents ignifuges sans halogène, les polyamides aliphatiques, notamment le polyamide 6, et/ou les polyamides partiellement aromatiques amorphes, notamment le PA 6I/6T, les agents photoprotecteurs, les stabilisateurs UV, les absorbeurs UV ou les agents bloquant les UV, les lubrifiants, les colorants, les agents de nucléation, les pigments métalliques, les antistatiques, les additifs de conductivité, les agents de démoulage, les azurants optiques, ainsi que leurs mélanges.

13. Pièce moulée en un matériau de moulage polyamide selon l'une quelconque des revendications précédentes, de préférence destinée à une utilisation dans un des domaines suivants : les appareils électriques, les articles de sport, les appareils optiques, les articles sanitaires et d'hygiène, les appareils ménagers, les technologies de communication, les technologies automobiles, les techniques de l'énergie et de la propulsion, la construction de machines, l'équipement médical, de manière particulièrement préférée dans tous ces cas sous la forme de boîtiers ou de parties de boîtiers, d'éléments fonctionnels, de dispositifs pour le transport ou le stockage de matériaux, notamment sous la forme de corps creux, d'éléments porteurs, d'éléments de cadre, de profilés et leurs combinaisons.

14. Procédé de fabrication d'une pièce moulée selon la revendication 13, **caractérisé en ce qu'**elle a été fabriquée par un procédé de moulage par injection, un procédé de moulage par soufflage ou un procédé d'extrusion.

15. Utilisation d'une pièce moulée selon la revendication 13 dans un des domaines suivants : les appareils électriques, les articles de sport, les appareils optiques, les articles sanitaires et d'hygiène, les appareils ménagers, les technologies de communication, les technologies automobiles, les techniques de l'énergie et de la propulsion, la construction de machines, l'équipement médical, de manière particulièrement préférée dans tous ces cas sous la forme de boîtiers ou de parties de boîtiers, d'éléments fonctionnels, de dispositifs pour le transport ou le stockage de matériaux, notamment sous la forme de corps creux, d'éléments porteurs, d'éléments de cadre, de profilés et leurs combinaisons, notamment en tant que partie ou boîtier entier d'un appareil électronique, de manière particulièrement préférée portable.
